# EUROPEAN PATENT APPLICATION

(11) **EP 4 851 814 A1**
(43) Date of publication of application: **09.12.2026**
(21) Application number: 26181238.2
(22) Date of filing: 27.05.2026
(51) Int. Cl.: G06F 13/24

(54) **APPARATUS AND METHOD FOR TRANSMITTING INTERRUPT SIGNAL BETWEEN SUBSYSTEMS IN SYSTEM-ON-CHIP, AND DEVICE**

(30) Priority: 06.06.2025 CN 202510762405
(71) Applicant: Shanghai Horizon Intelligent Automotive Technology Co., Ltd., Shanghai Jiading District 201800 (CN)
(72) Inventor: LI, Lei, Shanghai, 201800 (CN); ZHANG, Shuai, Shanghai, 201800 (CN); ZHANG, Meidi, Shanghai, 201800 (CN)
(74) Representative: Patentanwälte Magenbauer & Kollegen Partnerschaft mbB

(57) **Abstract**

Embodiments of the present disclosure disclose an apparatus and a method for transmitting an interrupt signal between subsystems in a system-on-chip, and a device. The apparatus includes a first transmitter corresponding to a first subsystem, configured to: convert a first interrupt signal from a first interrupt signal line into a first message in a preset bus protocol format, and send, through a bus, the first message to a first receiver of a second subsystem corresponding to the first interrupt signal line. The first receiver is configured to: receive the first message, convert the first message into a second interrupt signal of a corresponding first processing component, and transmit the second interrupt signal to the first processing component. The first processing component is an interrupt processing component in the second subsystem that is configured to respond to an interrupt request corresponding to the first interrupt signal.

## Description

### TECHNICAL FIELD

The present disclosure relates to technologies of signal transmission, and in particular, to an apparatus and a method for transmitting an interrupt signal between subsystems in a system-on-chip, and a device.

### BACKGROUND

With an increasing design scale of a system-on-chip (SoC for short, or referred to as a system-level chip), the system-on-chip becomes increasingly complex, and more components are integrated onto one chip. For example, a CPU (central processing unit), a MCU (microcontroller unit), and a PCIE (Peripheral Component Interconnect Express, a high-speed serial computer expansion bus) are integrated onto one chip. There are a lot of components with interrupt processing capabilities, and a number of interrupt sources that generate interrupt signals is becoming increasingly large, which poses a significant challenge to circuit layout and wiring of the chip, leading to an increasingly complex crossing design of chip wiring.

### SUMMARY

Embodiments of the present disclosure provide an apparatus and a method for transmitting an interrupt signal between subsystems in a system-on-chip, and a device, to effectively reduce routing crossings, and lower difficulty of circuit layout and wiring.

According to a first aspect of an embodiment of the present disclosure, an apparatus for transmitting an interrupt signal between subsystems in a system-on-chip is provided, including a first transmitter corresponding to a first subsystem, configured to: convert a first interrupt signal from a first interrupt signal line into a first message in a preset bus protocol format, and send, through a bus, the first message to a first receiver of a second subsystem corresponding to the first interrupt signal line. The first receiver is configured to: receive the first message, convert the first message into a second interrupt signal of a corresponding first processing component, and transmit the second interrupt signal to the first processing component. The first processing component is an interrupt processing component in the second subsystem that is configured to respond to an interrupt request corresponding to the first interrupt signal.

According to a second aspect of an embodiment of the present disclosure, a method for transmitting an interrupt signal between subsystems in a system-on-chip is provided, including: converting, by a first transmitter corresponding to a first subsystem, a first interrupt signal from a first interrupt signal line into a first message in a preset bus protocol format; sending, through a bus, the first message to a first receiver of a second subsystem corresponding to the first interrupt signal line; receiving the first message by the first receiver; converting the first message into a second interrupt signal of a corresponding first processing component by the first receiver; and transmitting the second interrupt signal to the first processing component by the first receiver, wherein the first processing component is an interrupt processing component in the second subsystem that is configured to respond to an interrupt request corresponding to the first interrupt signal.

According to a third aspect of an embodiment of the present disclosure, a computer readable storage medium is provided, wherein a computer program is stored on the storage medium, and the computer program is used for implementing the method for transmitting an interrupt signal between subsystems in a system-on-chip according to any one of the foregoing embodiments of the present disclosure.

According to a fourth aspect of an embodiment of the present disclosure, an electronic device is provided. The electronic device includes: a processor; and a memory configured to store instructions executable by the processor. The processor is configured to read the executable instructions from the memory, and execute the instructions to implement the method for transmitting an interrupt signal between subsystems in a system-on-chip according to any one of the foregoing embodiments of the present disclosure.

According to a fifth aspect of an embodiment of the present disclosure, a computer program product is provided. When instructions in the computer program product are executed by a processor, the method for transmitting an interrupt signal between subsystems in a system-on-chip according to any one of the foregoing embodiments of the present disclosure is implemented.

According to a sixth aspect of an embodiment of the present disclosure, a system-on-chip is provided. The system-on-chip includes the apparatus for transmitting an interrupt signal between subsystems in a system-on-chip according to any one of the foregoing embodiments of the present disclosure.

According to the apparatus and method for transmitting an interrupt signal between subsystems in a system-on-chip, and the device that are provided in the embodiments of the present disclosure, since the first interrupt signal from the first interrupt signal line of the first subsystem may be converted into the first message in the preset bus protocol format, the first message may be sent to the second subsystem through the bus. On the second subsystem side, the first message may be converted into the second interrupt signal of a corresponding processing component (that is, the first processing component), and the second interrupt signal may be transmitted to the first processing component. Thus, the interrupt signal is transmitted between the subsystems in the system-on-chip through the bus, which effectively avoids or reduces interrupt lines between the subsystems, so as to reduce occurrence of wiring crossings in the chip, thereby lowering difficulty of circuit layout and wiring of the system-on-chip.

### BRIEF DESCRIPTION OF DRAWINGS

FIG. 1 illustrates an exemplary application scenario of an apparatus for transmitting an interrupt signal between subsystems in a system-on-chip according to the present disclosure;
FIG. 2 is a schematic diagram illustrating a structure of an apparatus for transmitting an interrupt signal between subsystems in a system-on-chip according to an exemplary embodiment of the present disclosure;
FIG. 3 is a schematic diagram illustrating a structure of a first transmitter according to an exemplary embodiment of the present disclosure;
FIG. 4 is a schematic diagram illustrating a structure of a first transmitter according to another exemplary embodiment of the present disclosure;
FIG. 5 is a schematic diagram illustrating a structure of a first transmitter according to still another exemplary embodiment of the present disclosure;
FIG. 6 is a schematic diagram illustrating a structure of a first transmitter according to yet another exemplary embodiment of the present disclosure;
FIG. 7 is a schematic diagram illustrating a structure of a first transmitter according to still yet another exemplary embodiment of the present disclosure;
FIG. 8 is a schematic diagram illustrating a structure of a first receiver according to an exemplary embodiment of the present disclosure;
FIG. 9 is a schematic diagram illustrating a structure of a first receiver according to another exemplary embodiment of the present disclosure;
FIG. 10 is a schematic diagram illustrating a structure of an apparatus for transmitting an interrupt signal between subsystems in a system-on-chip according to another exemplary embodiment of the present disclosure;
FIG. 11 is a schematic diagram illustrating a structure of an apparatus for transmitting an interrupt signal between subsystems in a system-on-chip according to still another exemplary embodiment of the present disclosure;
FIG. 12 is a schematic diagram illustrating a structure of an apparatus for transmitting an interrupt signal between subsystems in a system-on-chip according to yet another exemplary embodiment of the present disclosure;
FIG. 13 is a schematic diagram illustrating a structure of an apparatus for transmitting an interrupt signal between subsystems in a system-on-chip according to still yet another exemplary embodiment of the present disclosure;
FIG. 14 is a schematic diagram illustrating a first configuration register according to an exemplary embodiment of the present disclosure;
FIG. 15 is a schematic diagram illustrating an extension register according to an exemplary embodiment of the present disclosure;
FIG. 16 is a schematic diagram illustrating a third status register according to an exemplary embodiment of the present disclosure;
FIG. 17 is a schematic diagram illustrating an interrupt signal transmission principle according to an exemplary embodiment of the present disclosure;
FIG. 18 is a schematic flowchart illustrating a method for transmitting an interrupt signal between subsystems in a system-on-chip according to an exemplary embodiment of the present disclosure;
FIG. 19 is a schematic flowchart illustrating a method for transmitting an interrupt signal between subsystems in a system-on-chip according to another exemplary embodiment of the present disclosure;
FIG. 20 is a schematic flowchart illustrating a method for transmitting an interrupt signal between subsystems in a system-on-chip according to still another exemplary embodiment of the present disclosure;
FIG. 21 is a schematic flowchart illustrating a method for transmitting an interrupt signal between subsystems in a system-on-chip according to yet another exemplary embodiment of the present disclosure; and
FIG. 22 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that the present disclosure is not limited by the exemplary embodiments.

It should be noted that, unless otherwise specifically stated, the relative arrangement of components and steps, numerical expressions, and numerical values set forth in these embodiments do not limit the scope of the present disclosure.

### Overview of Disclosure

In a process of implementing the present disclosure, the inventors have found that with an increasing scale of a system-on-chip (SoC for short, or referred to as a system-level chip), the system-on-chip becomes increasingly complex, and more components are integrated onto one chip. For example, a CPU (central processing unit), a MCU (a microcontroller unit), a PCIE (peripheral component interconnect express, high-speed serial computer expansion bus), and other components are integrated onto one chip. There are a lot of components with interrupt processing capabilities (which may be referred to as interrupt processing components). For example, the MCU, the CPU, and a DSP (digital signal processor) all include one or more interrupt processing components. Moreover, the number of interrupt sources that generate interrupt signals is becoming increasingly large, which poses a significant challenge to circuit layout and wiring of the chip, leading to an increasingly complex crossing design of chip wiring.

### Exemplary Overview

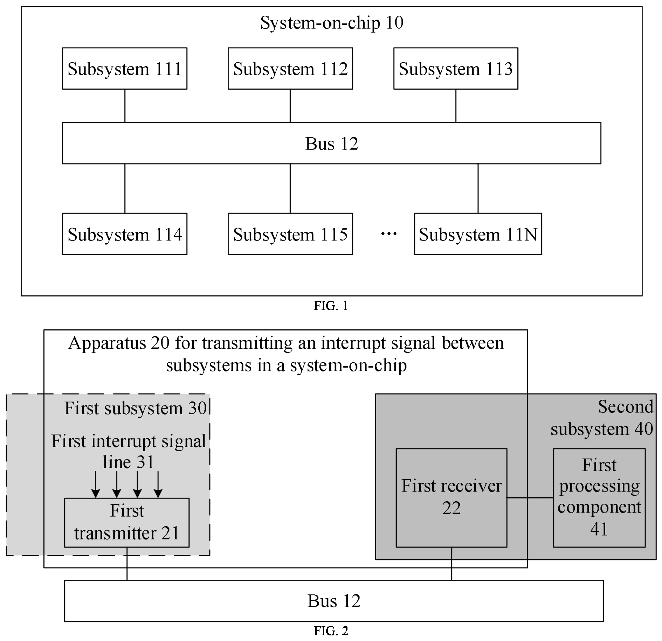

FIG. 1 illustrates an exemplary application scenario of an apparatus for transmitting an interrupt signal between subsystems in a system-on-chip according to the present disclosure. As shown in FIG. 1, a system-on-chip 10 includes N subsystems, that is, a subsystem 111, a subsystem 112, ..., and a subsystem 11N. The subsystems 11i (i=1, 2, ..., and N) may communicate with each other through a bus 12. The apparatus for transmitting an interrupt signal between subsystems in a system-on-chip according to embodiments of the present disclosure may be disposed on the system-on-chip 10. For example, for a subsystem with an interrupt source (which may be referred to as a first subsystem), a transmitter corresponding to the first subsystem (referred to as a first transmitter) may be disposed; and for a subsystem with an interrupt processing component (which may be referred to as a second subsystem), a receiver corresponding to the second subsystem (referred to as a first receiver) may be disposed. The first transmitter may be disposed within or outside the first subsystem. The first transmitter is configured to: convert a first interrupt signal from a first interrupt signal line into a first message in a preset bus protocol format corresponding to the bus 12; and send, through the bus 12, the first message to the first receiver of the second subsystem corresponding to the first interrupt signal line. The first receiver is configured to: receive the first message, convert the first message into a second interrupt signal of a corresponding first processing component, and transmit the second interrupt signal to the first processing component. The first processing component is an interrupt processing component in the second subsystem that is configured to respond to an interrupt request corresponding to the first interrupt signal. Since an interrupt signal of an interrupt signal line (may be referred to as an interrupt line for short) is converted, by the first transmitter, into the first message supported by the bus, the first message can be transmitted to the second subsystem through the bus 12. Further, the first message transmitted through the bus is converted into the second interrupt signal of the corresponding interrupt signal line in the second subsystem by the first receiver corresponding to the second subsystem, so that the second interrupt signal is transmitted to the first processing component through the interrupt signal line. Thus, the interrupt signal is transmitted between the subsystems through the bus 12, which may effectively avoid or reduce designs of interrupt signal lines between the subsystems, so as to reduce wiring crossings, thereby lowering difficulty of circuit layout and wiring of the system-on-chip. The first subsystem may be any subsystem with an interrupt source among the N subsystems in the system-on-chip 10. The second subsystem may be any subsystem, among the N subsystems in the system-on-chip 10, that has an interrupt processing component responding to an interrupt request of the interrupt source.

### Exemplary apparatus

FIG. 2 is a schematic diagram illustrating a structure of an apparatus for transmitting an interrupt signal between subsystems in a system-on-chip according to an exemplary embodiment of the present disclosure. This embodiment may be applied to an electronic device or a system-on-chip (SoC for short, or referred to as a system-level chip ). The electronic device may include, for example, an in-vehicle computing platform and a general-purpose computing platform. The system-on-chip may include, for example, an intelligent driving system-on-chip, an intelligent cockpit system-on-chip, a multimedia system-on-chip, and a system-on-chip for any other application scenario. As shown in FIG. 2, an apparatus 20 for transmitting an interrupt signal between subsystems in a system-on-chip (may be referred to as an apparatus for short) in this embodiment of the present disclosure may include a first transmitter 21 corresponding to a first subsystem 30 and a first receiver 22 corresponding to a second subsystem 40.

The first transmitter 21 corresponding to the first subsystem 30 is configured to: convert a first interrupt signal from a first interrupt signal line 31 into a first message in a preset bus protocol format; and send, through a bus 12, the first message to the first receiver 22 of the second subsystem 40 corresponding to the first interrupt signal line 31.

The first receiver 22 corresponding to the second subsystem 40 is configured to: receive the first message, convert the first message into a second interrupt signal of a corresponding first processing component 41, and transmit the second interrupt signal to the first processing component 41. The first processing component 41 is an interrupt processing component in the second subsystem 40 that is configured to respond to an interrupt request corresponding to the first interrupt signal.

The first subsystem 30 is electrically connected to the second subsystem 40 through the bus 12, and may be any subsystem with an interrupt source (such as a system-on-chip 10 in FIG. 1) in the system-on-chip. The interrupt source refers to software (or referred to as a software component) or hardware (or referred to as a hardware component) that can issue an interrupt request during a work process, and may include a hardware interrupt source and a software interrupt source. The hardware interrupt source triggers the interrupt request through a hardware circuit, while the software interrupt source triggers the interrupt request through a software instruction, fault information, error information, and the like. For example, the interrupt source refers to software or hardware in the first subsystem 30 that needs to request a service from other subsystems through the interrupt request. The first subsystem 30 may include one or more interrupt sources. The first interrupt signal line 31 is a signal line configured to transmit an interrupt signal generated by the interrupt source, and each interrupt source may correspond to one first interrupt signal line 31. The first interrupt signal is an interrupt signal generated by the interrupt source in the first subsystem, and is transmitted to the first transmitter 21 through the first interrupt signal line 31. The preset bus protocol format is a protocol format supported by the bus electrically connected to the first subsystem 30. The first transmitter 21 is a functional module configured to convert the first interrupt signal from the first interrupt signal line 31 in the first subsystem 30 into the first message that can be supported by the bus 12. The first transmitter 21 is also configured to transmit the first message to the bus 12, so as to transmit the first message to the first receiver 22 of the second subsystem 40 through the bus 12.

In some optional embodiments, the first subsystem 30 may use a same first transmitter 21 as an other subsystem. To be specific, the first interrupt signal line corresponding to the interrupt source of the other subsystem is configured to transmit the interrupt signal generated by the interrupt source to the first transmitter 21 corresponding to the first subsystem. The other subsystem is, for example but not limited to, a subsystem located physically adjacent to the first subsystem 30. In this case, the first transmitter 21 is also a first transmitter corresponding to the other subsystem. Whether two subsystems need to share the first transmitter 21 may be specifically set according to actual requirements.

The second subsystem 40 is a subsystem in the system-on-chip that can respond to the first interrupt signal transmitted from the first subsystem 30. First interrupt signals generated by different interrupt sources in the first subsystem 30 may be transmitted to different second subsystems. In other words, different first interrupt signals may correspond to different second subsystems, that is, first messages corresponding to different first interrupt signals may be transmitted to first receivers corresponding to different second subsystems. In a specific optional implementation, the first subsystem 30 includes n interrupt sources, which are electrically connected to the first transmitter 21 through n first interrupt signal lines 31, respectively. The first interrupt signal generated by an i^{th} (i is a positive integer greater than 1 and less than n) interrupt source is an interrupt signal transmitted to one of the second subsystems in the system-on-chip, and the first interrupt signal generated by a j^{th} (j is a positive integer greater than 1 and less than n, and is not equal to i) interrupt source is an interrupt signal initiated to another second subsystem in the system-on-chip. The first receiver 22 is a functional module that can receive the first message corresponding to the second subsystem 40 and transmitted by the bus 12, and can convert the first message into a second interrupt signal that meets requirements of a transmission protocol of the second interrupt signal line, so that the second interrupt signal is transmitted to the first processing component 41 corresponding to the second interrupt signal through the second interrupt signal line. The first processing component 41 is an interrupt processing component in the second subsystem 40 that is configured to respond to an interrupt request corresponding to the first interrupt signal.

In a specific optional embodiment, the first subsystem 30 is a sensor subsystem, and the second subsystem 40 is a CPU subsystem. When collecting sensor data, the sensor subsystem generates the first interrupt signal, which is transmitted to the first transmitter 21 corresponding to the first subsystem 30 through the first interrupt signal line 31. The first transmitter 21 converts the first interrupt signal from the first interrupt signal line 31 into the first message in the preset bus protocol format, and sends the first message to the first receiver 22 of the CPU subsystem through the bus 12. The first receiver 22 converts the first message into the second interrupt signal, and transmits the second interrupt signal to the first processing component 41 in the CPU subsystem that is configured to respond to the first interrupt signal, to request the first processing component 41 in the CPU subsystem to perform corresponding perception processing based on the sensor data, to obtain a perception result. Further, the first processing component 41 in the CPU subsystem is, for example but not limited to, a perception processing component (or referred to as a perception processing service). Optionally, the first interrupt signals generated by different interrupt sources may be interrupt signals sent to a same second subsystem. For example, the second subsystem includes a plurality of first processing components 41, which may respectively respond to interrupt requests corresponding to the first interrupt signals generated by the different interrupt sources.

In some optional embodiments, the apparatus 20 in the embodiments of the present disclosure is a hardware apparatus, and may be implemented by using hardware devices such as a controller, a comparator, a register, and a selector.

In some optional embodiments, the first transmitter 21 is a hardware circuit, to ensure real-time processing for the interrupt request. For example, the first transmitter 21 may implement corresponding functions by using logic devices such as a register, a comparator, and a selector.

In some optional embodiments, the first receiver 22 is a hardware circuit, to ensure real-time processing for the interrupt request. For example, the first receiver 22 may implement corresponding functions by using logic devices such as a register, a comparator, and a selector.

In some optional embodiments, at a same moment, the first transmitter 21 may respectively convert the first interrupt signals from one or more first interrupt signal lines 31 into first messages in the preset bus protocol format; and send, through the bus 12, the first messages to the first receiver 22 of the second subsystem 40 corresponding to the first interrupt signals. Different first interrupt signals may correspond to first receivers 22 of the same or different second subsystems 40.

In some optional embodiments, when there are first interrupt signals simultaneously generated by a plurality of first interrupt signal lines 31, the first interrupt signals may be sequentially converted into corresponding first messages according to a preset sequence of the first interrupt signal lines 31. The preset sequence includes, but is not limited to, setting according to a priority sequence of the interrupt requests corresponding to the first interrupt signal lines 31, or setting randomly.

In some optional embodiments, the first transmitter 21 may be disposed inside (as shown in FIG. 2) or outside the first subsystem 30. When the first transmitter 21 is disposed outside the first subsystem 30, the first transmitter 21 may be electrically connected to the first subsystem 30 and the bus 12, respectively. The interrupt sources in the first subsystem 30 are electrically connected to the first transmitter 21 through the first interrupt signal lines 31, to transmit the first interrupt signals to the first transmitter.

In some optional embodiments, the first receiver 22 may be disposed inside (as shown in FIG. 2) or outside the second subsystem 40. When disposed outside the second subsystem 40, the first receiver 22 may be electrically connected to the second subsystem 40 and the bus 12, respectively. The first receiver 22 is electrically connected to the first processing component 41 in the second subsystem 40 through the second interrupt signal line, so as to transmit the second interrupt signal to the first processing component 41 corresponding to the second interrupt signal.

In some optional embodiments, the first interrupt signal may be a level signal, such as a 0/1 level signal. A signal status changes from 0 to 1, indicating that the interrupt source corresponding to the level signal generates the first interrupt signal, that is, issues an interrupt request.

In some optional embodiments, the first message may include a plurality of fields of a specified type, wherein different fields represent different types of information. For example, the plurality of fields of a specified type include a control information field and a data field.

According to the apparatus for transmitting an interrupt signal between subsystems in a system-on-chip that is provided in the present disclosure, since the first interrupt signal transmitted from the first interrupt signal line of the first subsystem can be converted into the first message in the preset bus protocol format, the first message may be sent to the second subsystem through the bus. On the second subsystem side, the first message may be converted into the second interrupt signal by the first receiver 22, and the second interrupt signal may be transmitted to the first processing component corresponding to the second interrupt signal. Thus, the interrupt signal is transmitted between the subsystems in the system-on-chip through the bus, which effectively avoids or reduces designs of interrupt lines between the subsystems, so as to effectively reduce wiring crossings in the system-on-chip, thereby lowering difficulty of circuit wiring of the system-on-chip.

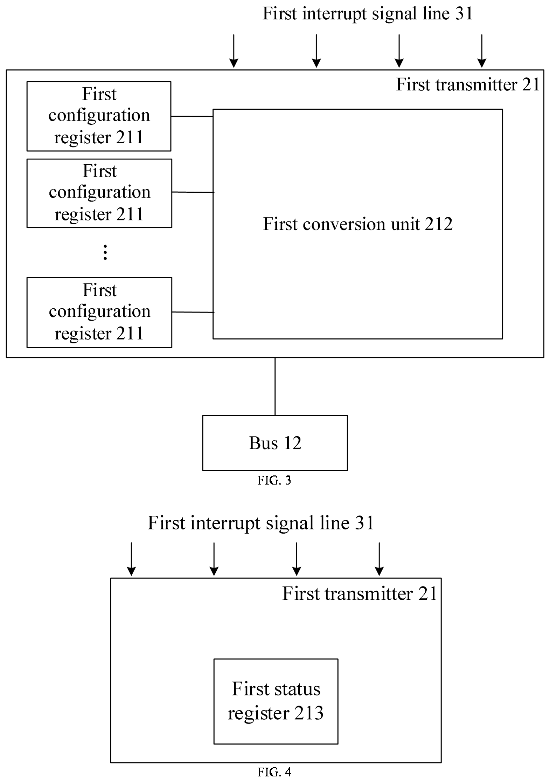

FIG. 3 is a schematic diagram illustrating a structure of a first transmitter according to an exemplary embodiment of the present disclosure.

In some optional embodiments, on the basis of the embodiment shown in FIG. 2, as shown in FIG. 3, an input end of the first transmitter 21 is electrically connected to a first number of first interrupt signal lines 31, each of which corresponds to one interrupt source.

The first transmitter 21 includes a first conversion unit 212 and first configuration registers 211 respectively corresponding to the first interrupt signal lines 31.

The first configuration register 211 corresponding to any one of the first interrupt signal lines 31 is configured to store the first receiver information corresponding to that first interrupt signal line 31.

The first conversion unit 212 is configured to generate the first message according to the preset bus protocol format according to the first interrupt signal and the first receiver information corresponding to the first interrupt signal line.

The first number is determined based on a number of the interrupt sources in the first subsystem 30. The interrupt signals respectively transmitted by the first interrupt signal lines 31 correspond to different interrupt requests. The first receiver information represents a destination receiver to which the interrupt request corresponding to the first interrupt signal line 31 needs to be transmitted and an interrupt location at the corresponding destination receiver. For example, the first receiver information may include a receiver identifier (may be represented as DST ID or ID, and may also be referred to as a first receiver identifier) and an interrupt location identifier (may be represented as DST IDX or IDX, and may also be referred to as a first interrupt location identifier). Alternatively, the first receiver information may represent a receiver and an interrupt location by a multi-bit code. For example, 01 represents a receiver 0 and an interrupt location 1. The interrupt location refers to a location of the second interrupt signal line at an output end of the first receiver.

In some optional embodiments, the first configuration register 211 may be any type of register, and may store the first receiver information by using a certain number of fields. Optionally, the first configuration register 211 may also store other relevant information. For example, the first configuration register 211 may be a register with a bit width of 16 bits, 32 bits, or 64 bits. A location of the first receiver information in the first configuration register 211 is determined based on a bit width of the first receiver information.

In some optional embodiments, the first conversion unit 212 may be electrically connected to the first configuration register 211, so as to be able to read corresponding receiver information (such as the first receiver information) or other information from the first configuration register 211.

In some optional embodiments, the first conversion unit 212 may be a hardware device or a circuit that implements a corresponding conversion function by at least one logic device, such as a selector, a comparator, and a controller. For example, the first conversion unit 212 is electrically connected to the first interrupt signal line 31 through an input end of the comparator, and another input end of the comparator is connected to a preset status (such as 0). When a signal status of the first interrupt signal line 31 jumps from 0 to 1, the comparator outputs a level signal to the controller, which reads the first receiver information in the first configuration register 211 corresponding to the first interrupt signal line 31, and generates the first message according to the preset bus protocol format according to the first receiver information.

In some optional embodiments, each first interrupt signal line 31 corresponds to one first configuration register 211. The first receiver information corresponding to the first interrupt signal line 31 is configured in the first configuration register 211, so that when the first interrupt signal is converted to the first message, the first message can include the first receiver information. Thus, the bus can transmit the first message to the first receiver, and the first receiver can convert the first message into the second interrupt signal of the corresponding second interrupt signal line.

In the embodiments of the present disclosure, the first configuration register is used to store the first receiver information corresponding to the first interrupt signal line, so that the first conversion unit can accurately obtain the first receiver information corresponding to the current first interrupt signal line during signal conversion, to accurately transmit the first message to the corresponding first receiver, thereby ensuring transmission effectiveness of the interrupt signal.

FIG. 4 is a schematic diagram illustrating a structure of a first transmitter according to another exemplary embodiment of the present disclosure.

In some optional embodiments, on the basis of any one of the foregoing embodiments, as shown in FIG. 4, the first transmitter 21 further includes a first status register 213.

The first status register 213 is configured to store interrupt indication information corresponding to the first interrupt signal line 31.

The first transmitter 21 is further configured to: monitor a current signal status of the first interrupt signal line 31; and determine the first interrupt signal based on the current signal status and the interrupt indication information stored in the first status register 213.

The interrupt indication information that corresponds to the first interrupt signal line 31 and is stored in the first status register 213 refers to information that is updated at a previous moment (or referred to as a historical moment) and indicates whether the first interrupt signal line 31 is in an interrupt status. For example, for any first interrupt signal line 31, after an interrupt signal previously transmitted by this first interrupt signal line is responded to, the interrupt indication information that corresponds to this first interrupt signal line 31 and is stored in the first status register 213 is updated to a non-interrupt status (for example, the non-interrupt status is represented by using 0), indicating that this first interrupt signal line 31 temporarily transmits no interrupt signal. When it is monitored that the current signal status of the first interrupt signal line 31 is 1, since the current signal status is different from the interrupt indication information (0) that is of the first interrupt signal line 31 and is stored in the first status register 213, it indicates that the first interrupt signal line 31 transmits a new interrupt signal. Based on this, the first interrupt signal of the first interrupt signal line 31 may be determined.

In some optional embodiments, the first status register 213 may be updated based on the current signal status, so that the interrupt indication information in the first status register 213 that corresponds to the first interrupt signal line 31 is updated from the non-interrupt status (such as 0) to the interrupt status (such as 1). In other words, the interrupt indication information in the first status register 213 that corresponds to the first interrupt signal line 31 is updated from 0 to 1. In response to the interrupt indication information in the first status register 213 being updated to the interrupt status, the first transmitter 21 determines the interrupt status as the first interrupt signal.

In some optional embodiments, the first status register 213 may be a register with a preset bit width, and each bit in the first status register 213 correspondingly stores the interrupt indication information (0 or 1) of one first interrupt signal line 31. For example, the first status register 213 may be a register with a bit width of 16 bits, 32 bits, or 64 bits. If a number of the first interrupt signal lines 31 is greater than the bit width of one first status register 213, a plurality of first status registers 213 may be disposed, and the first status registers 213 may store the interrupt indication information corresponding to the first interrupt signal lines 31, respectively. For example, if the first status register 213 is a 32-bit register and the number of the first interrupt signal lines 31 is 100, four first status registers 213 may be used to store the interrupt indication information corresponding to the 100 first interrupt signal lines 31.

In some optional embodiments, the current signal status of the first interrupt signal line 31 may be compared with the interrupt indication information in the first status register 213 by a comparator, and the first interrupt signal may be output through an output end of the comparator. For example, the first interrupt signal line 31 is electrically connected to an input end of the comparator to input the current signal status of the first interrupt signal line 31 into the comparator, the first status register 213 is electrically connected to another input end of the comparator to input the interrupt indication information in the first status register 213 that corresponds to the first interrupt signal line 31 into the comparator, and the current signal status of the first interrupt signal line 31 is compared with the interrupt indication information in the first status register 213 by the comparator. The comparator outputs the first interrupt signal when the interrupt indication information corresponding to the first interrupt signal line 31 is in the non-interrupt status and the current signal status of the first interrupt signal line 31 is different from the interrupt indication information in the first status register 213.

In the embodiments of the present disclosure, the interrupt indication information corresponding to the first interrupt signal line is stored by the first status register. This facilitates the comparison between the current signal status of the first interrupt signal line 31 and the stored interrupt indication information, being able to effectively determine whether the first interrupt signal line 31 transmits the interrupt signal from the interrupt source.

In some optional embodiments, the first conversion unit 212 is further configured to: monitor the current signal status of the first interrupt signal line 31; and determine the first interrupt signal based on the current signal status and the interrupt indication information stored in the first status register 213.

The first conversion unit 212 may monitor and compare the current signal status by a logic devices such as a comparator, and details are not described.

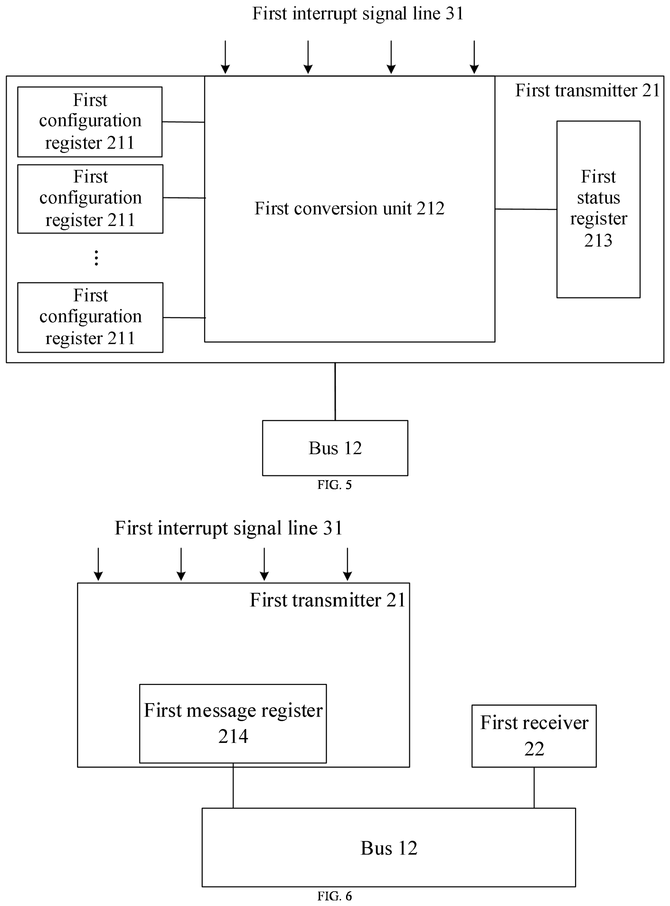

FIG. 5 is a schematic diagram illustrating a structure of a first transmitter 21 according to still another exemplary embodiment of the present disclosure.

In some optional embodiments, on the basis of any one of the foregoing embodiments, as shown in FIG. 5, the first transmitter 21 includes the first configuration registers 211 respectively corresponding to the first interrupt signal lines 31, the first conversion unit 212, and the first status register 213.

The first conversion unit 212 is respectively electrically connected to the first interrupt signal line 31, the first status register 213, and the first configuration register 211, and is configured to: monitor the current signal status of the first interrupt signal line 31; determine the first interrupt signal based on the current signal status of the first interrupt signal line 31 and the interrupt indication information stored in the first status register 213; and generate the first message according to the preset bus protocol format according to the first interrupt signal and the first receiver information that is read from the first configuration register 211 and corresponds to the first interrupt signal line 31.

For the first configuration register 211, the first conversion unit 212, and the first status register 213, reference may be made to the foregoing embodiments, and specific operations are not described herein.

FIG. 6 is a schematic diagram illustrating a structure of a first transmitter according to yet another exemplary embodiment of the present disclosure.

In some optional embodiments, on the basis of any one of the foregoing embodiments, as shown in FIG. 6, the first transmitter 21 further includes a first message register 214.

The first message register 214 is configured to store the first message.

The first transmitter 21 is further configured to: write the interrupt indication information corresponding to the first interrupt signal and the first receiver information corresponding to the first interrupt signal line 31 into the first message register 214, where the interrupt indication information corresponding to the first interrupt signal and the first receiver information corresponding to the first interrupt signal line 31 are arranged and stored in the first message register 214 according to the preset bus protocol format, to form the first message; and send the first message in the first message register 214 to the bus 12, that is, read the first message from the first message register 214 and transmit the first message to the bus 12, so as to transmit the first message to the first receiver 22 through the bus 12.

The first message register 214 may be any type of register. The first message is stored in the first message register 214 according to the preset bus protocol format. For example, the first message register may include control field and a data field. The control field is used to store control information, and the bus may route the first message to the corresponding first receiver based on the control information. The control information may include, for example, the first receiver identifier (which is also referred to as a destination receiver identifier, and is obtained from the first receiver information). The data field may include the interrupt location identifier (which is obtained from the first receiver information) corresponding to the first interrupt signal and the interrupt indication information. For example, the interrupt indication information corresponds to the first interrupt signal. The interrupt indication information corresponding to the first interrupt signal is information representing the interrupt status (such as 1), and indicates the interrupt status of the second interrupt signal line at the interrupt location.

In some optional embodiments, the interrupt indication information corresponding to the first interrupt signal and the first receiver information corresponding to the first interrupt signal line are written into the first message register 214. After being generated by the first message register 214, the first message may be read from the first message register 214, and the first message in the first message register 214 may be transmitted to the bus 12, to be transmitted to the first receiver 22 through the bus 12.

In the embodiments of the present disclosure, the first message is stored by the first message register. During conversion of the first interrupt signal, the interrupt indication information corresponding to the first interrupt signal and the first receiver information corresponding to the first interrupt signal line may be written into the first message register according to the preset bus protocol format, to obtain the first message. In this way, the first interrupt signal is effectively converted into a message supported by the bus, providing the valid first message for transmitting the interrupt signal through the bus.

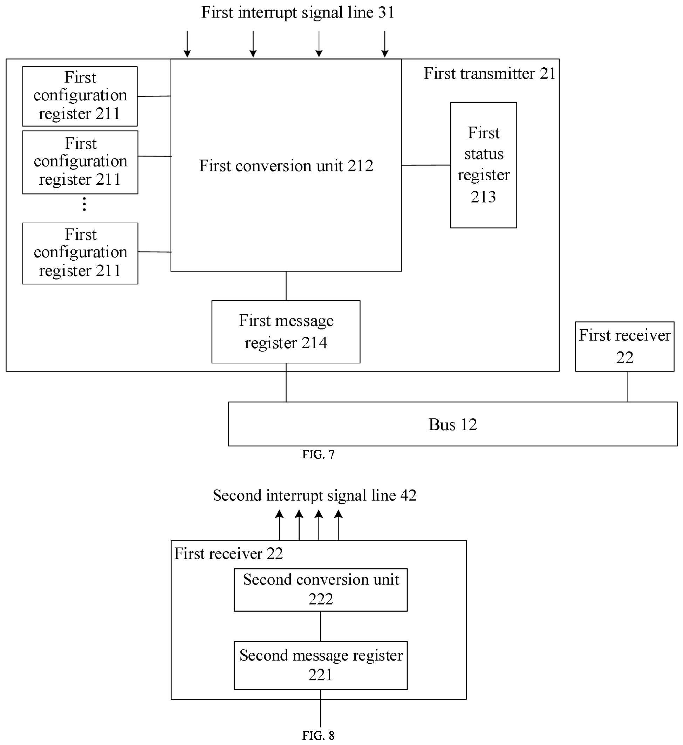

FIG. 7 is a schematic diagram illustrating a structure of a first transmitter according to still yet another exemplary embodiment of the present disclosure.

In some optional embodiments, as shown in FIG. 7, the first transmitter 21 includes the first configuration registers 211 respectively corresponding to the first interrupt signal lines 31, the first conversion unit 212, the first status register 213, and the first message register 214.

The first conversion unit 212 is respectively electrically connected to the first interrupt signal line 31, the first status register 213, the first message register 214, and the first configuration register 211, and is configured to: monitor the current signal status of the first interrupt signal line 31; determine the first interrupt signal based on the current signal status and the interrupt indication information read from the first status register 213; and write the interrupt indication information corresponding to the first interrupt signal and the first receiver information that is read from the first configuration register 211 and corresponds to the first interrupt signal line into the first message register 214.

The first message register 214 is configured to store the first message according to the preset bus protocol format. Subsequently, the first message is transmitted to the first receiver 22 through the bus 12. For example, the first conversion unit 212 updates a read/write status of the first message register 214 to read enabled, so that the first message can be read from the first message register 214 through the bus 12.

The first transmitter 21 shown in FIG. 7 is an example in which the foregoing embodiments are implemented in combination, and for components and specific operations thereof, reference may be made to the foregoing embodiments. Details are not described herein again.

FIG. 8 is a schematic diagram illustrating a structure of a first receiver according to an exemplary embodiment of the present disclosure.

In some optional embodiments, on the basis of any one of the foregoing embodiments, as shown in FIG. 8, the first message includes the interrupt indication information corresponding to the first interrupt signal and the first receiver information corresponding to the first interrupt signal line; and the first receiver information includes a corresponding interrupt location identifier of the first processing component 41 corresponding to the first interrupt signal line in the first receiver 22.

The first receiver 22 includes a second message register 221 and a second conversion unit 222.

The second message register 221 is electrically connected to the second conversion unit 222, and is configured to store the received first message.

The second conversion unit 222 is configured to convert the first message into the second interrupt signal of the first processing component 41 according to the interrupt indication information and the interrupt location identifier in the second message register 221.

The corresponding interrupt location identifier of the first processing component 41 in the first receiver 22 refers to a location of the second interrupt signal line through which the first processing component 41 is electrically connected to the first receiver 22 in second interrupt signal lines electrically connected to the first receiver 22. The interrupt location identifier may be represented as an identifier or a code of the second interrupt signal line. For example, if an output end of the first receiver 22 is connected to m (m is a positive integer) second interrupt signal lines, interrupt location identifiers respectively corresponding to the m second interrupt signal lines are represented by using 0, 1, ..., and m-1, and the interrupt location identifier corresponding to the second interrupt signal line connected to the first processing component 41 is 1, the first message includes the interrupt indication information (such as 1) corresponding to the first interrupt signal and the interrupt location identifier 1. The first message also includes a receiver identifier of the first receiver corresponding to the first interrupt signal line.

In some optional embodiments, the second message register 221 is similar to the first message register 214 decried above, and details are not described herein.

In some optional embodiments, the second conversion unit 222 may read the interrupt location identifier and the interrupt indication information from the second message register 221; and set, according to the interrupt location identifier and the interrupt indication information, a signal status of the second interrupt signal line corresponding to the interrupt location identifier to be consistent with the interrupt indication information, so that the signal status of the second interrupt signal line is a status (such as 1) indicating interruption. Thus, the first message is converted into the second interrupt signal transmitted by the second interrupt signal line, and the second interrupt signal is transmitted to the first processing component 41 through the second interrupt signal line. The first processing component 41 may perform corresponding processing in response to the second interrupt signal.

In some optional embodiments, the second conversion unit 222 may be implemented by a controller and/or other logic devices.

In the embodiments of the present disclosure, the received first message is stored by the second message register, so as to provide an accurate and valid first message for the second conversion unit. This helps the second conversion unit read the required interrupt indication information and interrupt location identifier from the first message according to the preset bus protocol format, thereby providing effective information reference for converting the first message into the second interrupt signal.

In some optional embodiments, as shown in FIG. 8, the output end of the first receiver 22 is electrically connected to at least one second interrupt signal line 42, each of which corresponds to one interrupt processing component.

The second conversion unit 222 is specifically configured to: determine a second interrupt signal line 42 corresponding to the first message from the at least one second interrupt signal line 42 according to the interrupt location identifier; and update, according to the interrupt indication information, a signal status of the second interrupt signal line 42 corresponding to the first message.

The second interrupt signal line 42 is a signal line connected to the interrupt processing component in the second subsystem 40, and each second interrupt signal line may correspond to one interrupt processing component (such as the first processing component 41). Optionally, different second interrupt signal lines may correspond to a same interrupt processing component or to different interrupt processing components. A number of the second interrupt signal lines 42 may be determined based on that of the interrupt processing components in the second subsystem 40. The interrupt location identifier indicates a location of a destination interrupt signal line (that is, the second interrupt signal line 42 corresponding to the first message) in the second interrupt signal lines connected to the first receiver 22. Therefore, the second interrupt signal line 42 corresponding to the first message may be determined from the second interrupt signal lines 42 according to the interrupt location identifier. The interrupt indication information indicates an interrupt status of the destination interrupt signal line. Therefore, the signal status of the second interrupt signal line 42 corresponding to the first message is updated according to the interrupt indication information, so that the signal status of the second interrupt signal line 42 is the interrupt status. For example, the signal status of the second interrupt signal line 42 is updated from 0 to 1.

In the embodiments of the present disclosure, the output end of the first receiver is electrically connected to the second interrupt signal line, and thus the signal status of the second interrupt signal line 42 corresponding to the first message is updated to convert the first message into the second interrupt signal transmitted by the second interrupt signal line 42, so as to effectively transmit the interrupt request corresponding to the first interrupt signal to the first processing component.

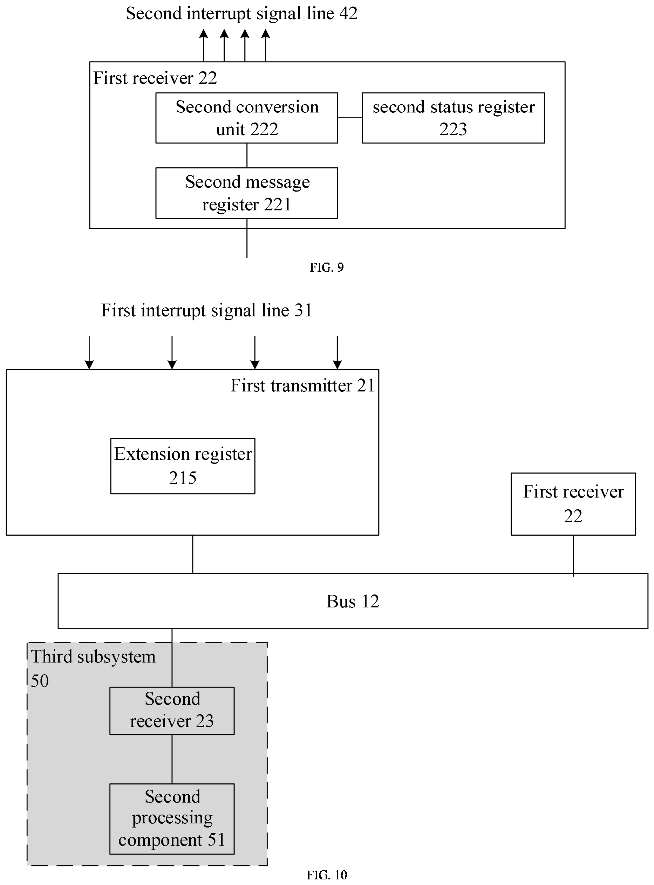

FIG. 9 is a schematic diagram illustrating a structure of a first receiver according to another exemplary embodiment of the present disclosure.

In some optional embodiments, on the basis of the foregoing embodiments, as shown in FIG. 9, the first receiver 22 further includes:

a second status register 223 that is electrically connected to the second conversion unit 222 and is configured to store the signal status of the second interrupt signal line 42.

The second conversion unit 222 is specifically configured to update, according to the interrupt indication information, the signal status of the second interrupt signal line 42 corresponding to the first message in the second status register 223, so that the second interrupt signal is transmitted to the first processing component 41 through the second interrupt signal line 42.

The second status register 223 is similar to the first status register 213, and may be any type of register. The signal status of the second interrupt signal line 42 may include two statuses: 1 (or a high level) and 0 (or a low level). 1 (or the high level) may indicate an interrupt signal, and 0 (or the low level) may indicate a non-interrupt signal. A specific representation mode is not limited.

In some optional embodiments, a bit width of the second status register 223 may be set according to actual requirements. For example, the bit width of the second status register 223 may be 16 bits, 32 bits, or 64 bits.

In some optional embodiments, the second conversion unit 222 reads, from the second message register 221, the interrupt indication information and the interrupt location identifier in the first message; and then updates, according to the interrupt indication information, the signal status of the second interrupt signal line 42 corresponding to the first message in the second status register 223. For example, the signal status of the second interrupt signal line 42 is updated to the interrupt status to obtain the second interrupt signal, so that the second interrupt signal is transmitted to the first processing component through the second interrupt signal line 42.

In some optional embodiments, the second status register 223 may be electrically connected to the second interrupt signal line 42, to update the signal status of the second interrupt signal line 42 by updating statuses of all bits of the second status register 223.

In the embodiments of the present disclosure, the signal status of the second interrupt signal line is stored by the second status register, so that the second conversion unit can accurately convert the first message into the second interrupt signal of the corresponding second interrupt signal line according to the interrupt location identifier and the interrupt indication information in the first message. Thus, the second interrupt signal is transmitted to the corresponding first processing component through the second interrupt signal line.

FIG. 10 is a schematic diagram illustrating a structure of an apparatus for transmitting an interrupt signal between subsystems in a system-on-chip according to another exemplary embodiment of the present disclosure.

In some optional embodiments, on the basis of any one of the foregoing embodiments, as shown in FIG. 10, the first transmitter 21 further includes an extension register 215.

The extension register 215 is configured to store an interrupt source identifier corresponding to a to-be-broadcasted first interrupt signal line 31 and second receiver information.

The first transmitter 21 is further configured to: generate a second message in the preset bus protocol format according to the first interrupt signal of the first interrupt signal line 31 corresponding to the interrupt source identifier and the second receiver information, and send the second message to a second receiver 23 corresponding to the second receiver information through the bus 12, wherein the second receiver 23 is a receiver corresponding to a third subsystem 50.

The second receiver 23 is configured to convert the second message into a third interrupt signal of a corresponding second processing component 51, and transmit the third interrupt signal to the second processing component 51.

In some optional embodiments, the apparatus in the embodiments of the present disclosure further includes the second receiver 23 corresponding to the third subsystem 50.

The extension register 215 may be any type of register. The extension register 215 is configured to store the interrupt source identifier corresponding to the to-be-broadcasted first interrupt signal line 31 and broadcasted destination receiver information (that is, the second receiver information). The to-be-broadcasted first interrupt signal line 31 indicates that the interrupt request of this first interrupt signal line 31 corresponds to a plurality of destinations, that is, in addition to a first destination corresponding to the first receiver information, the interrupt request also needs to be transmitted to at least one second destination subsystem and/or component. For example, the first interrupt signal of the first interrupt signal line 31 needs to be transmitted to a plurality of different second subsystems 40, or to a plurality of different interrupt processing components. Any two interrupt processing components may be components in a same subsystem or components in different subsystems. The interrupt source identifier is an identifier of an interrupt source corresponding to this first interrupt signal line 31. Optionally, the interrupt source identifier may be represented as a location number of the first interrupt signal line 31. For example, the number of the first interrupt signal lines 31 is n, which are represented by using 0, 1, 2, ..., and n-1, respectively. The interrupt source identifiers may be represented by using 0, 1, 2, and n-1. The second receiver information is different from the first receiver information.

In some optional embodiments, the second receiver information includes an identifier of the second receiver 23 (which is referred to as a receiver identifier for short or a second receiver identifier) and an interrupt location identifier corresponding to the second receiver 23 (which may be referred to as a second interrupt location identifier). The receiver identifier in the first receiver information is referred to as the first receiver identifier, and the interrupt location identifier in the first receiver information is referred to as the first interrupt location identifier. The second receiver information satisfies that the second receiver identifier is different from the first receiver identifier, and/or the second interrupt location identifier is different from the first interrupt location identifier.

In some optional embodiments, when the second receiver identifier is same as the first receiver identifier and the second interrupt location identifier is different from the first interrupt location identifier, the second receiver 23 and the first receiver 22 are a same receiver, the third subsystem 50 is the second subsystem 40, and the second processing component 51 is an interrupt processing component in the second subsystem 40 that is different from the first processing component 41. When the second receiver identifier is different from the first receiver identifier, the second receiver 23 is different from the first receiver 22, and the third subsystem 50 and the second subsystem 40 are different subsystems.

In some optional embodiments, a format of the second message is similar to that of the first message. For example, the second message may include a plurality of specified types of fields, where different fields represent different information, such as a control information field and a data field. Details are not described. The first transmitter 21 may read the interrupt source identifier and the second receiver information from the extension register 215. A to-be-broadcasted first interrupt signal of the interrupt source may be determined based on the interrupt source identifier, and then the second message may be generated according to the first interrupt signal and the second receiver information. The specific operation of generating the second message according to the first interrupt signal and the second receiver information is similar to that of generating the first message, and details are not described herein.

In some optional embodiments, the apparatus in the embodiments of the present disclosure further includes the second receiver 23.

In some optional embodiments, when the first transmitter 21 includes the first conversion unit 212, the extension register 215 is electrically connected to the first conversion unit 212, and the first conversion unit 212 is configured to: generate a second message in the preset bus protocol format according to the first interrupt signal of the first interrupt signal line 31 corresponding to the interrupt source identifier and the second receiver information, and send the second message to the second receiver 23 corresponding to the second receiver information through the bus 12.

In some optional embodiments, there may be one or more second receivers 23.

In some optional embodiments, when first interrupt signals transmitted by a plurality of first interrupt signal lines 31 are monitored at the same time, first configuration registers 211 corresponding to the first interrupt signal lines 31 may be sequentially traversed to convert the first interrupt signals into corresponding first messages, and the first messages may be sent to the corresponding first receiver 21 through the bus 12. Further, extension registers 215 are sequentially traversed to generate a corresponding second message for each to-be-broadcasted first interrupt signal, and the second message is sent to the second receiver 23 corresponding to the second message through the bus 12.

In some optional embodiments, there may be one or more extension registers 215. This may be specifically set according to actual requirements, and is not limited in the embodiments of the present disclosure.

In some optional embodiments, a number of the extension registers 215 may be determined based on that of the first interrupt signal lines 31 in the first subsystem 30 that need to be broadcasted. Alternatively, the number of the extension registers 215 may be determined based on the number of the first interrupt signal lines 31 that need to be broadcasted, and a number of destinations to which each first interrupt signal line 31 needs to be broadcasted, to ensure that the number of the extension registers 215 can meet broadcasting requirements. For example, if first interrupt signals of 5 first interrupt signal lines 31 among 100 first interrupt signal lines 31 need to be broadcasted, 5 extension registers 215 may be disposed to meet broadcasting requirements of the 5 first interrupt signals.

In the embodiments of the present disclosure, the interrupt source identifier corresponding to the to-be-broadcasted first interrupt signal line and the second receiver information are stored by the extension register, so that the first interrupt signal of a same first interrupt signal line may be broadcasted to at least two destinations, so as to meet requirements of sending a same interrupt request to a plurality of different interrupt processing components, thereby further reducing designs of interrupt signal lines between subsystems.

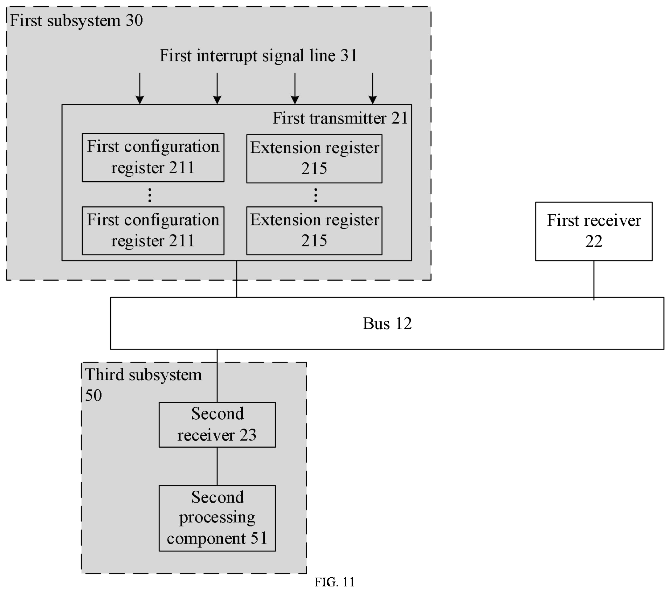

FIG. 11 is a schematic diagram illustrating a structure of an apparatus for transmitting an interrupt signal between subsystems in a system-on-chip according to still another exemplary embodiment of the present disclosure.

In some optional embodiments, on the basis of any one of the foregoing embodiments, as shown in FIG. 11, the first transmitter 21 includes the first configuration registers 211 respectively corresponding to the first interrupt signal lines 31 and at least one extension register 215.

The first subsystem 30 is configured to:
determine a broadcast status corresponding to the interrupt source; determine, in response to the broadcast status being a first status, first receiver information and second receiver information corresponding to the interrupt source; configure a first configuration register 211 corresponding to the interrupt source, according to the first receiver information; and configure an extension register 215 corresponding to the interrupt source, according to the second receiver information.

For the first configuration register 211 and the extension register 215, reference may be made to the foregoing embodiments, and details are not described herein again. The broadcast status includes a first status and a second status, where the first status indicates that broadcasting is required while the second status indicates that broadcasting is not required.

In some optional embodiments, the first subsystem 30 may execute a pre-configured computer program (or referred to as software) to implement a corresponding configuration function, that is, to determine the broadcast status corresponding to the interrupt source. When the broadcast status is the first status (that is, broadcasting is required), the first receiver information and the second receiver information corresponding to the interrupt source are determined, and then the first configuration register 211 corresponding to the interrupt source is configured according to the first receiver information, and the extension register 215 corresponding to the interrupt source is configured according to the second receiver information and the identifier of the interrupt source. The first receiver information and the second receiver information corresponding to the interrupt source may be obtained from configuration information provided by a relevant user (such as a developer or a user of the system-on-chip). For example, if the first transmitter 21 can accept 40 first interrupt signal lines and there is one first interrupt signal line connected to the first transmitter 21 as a 0^{th} interrupt line, the first configuration register 211 corresponding to the 0^{th} interrupt line serves as a 0^{th} first configuration register 211. If the 0^{th} interrupt line has two destinations, which are respectively a 0^{th} interrupt location of a 1^{st} receiver (such as the first receiver 22) and a 1^{st} interrupt location of a 2^{nd} receiver (such as the second receiver 23), the computer program may be executed through the first subsystem 30 to configure a receiver identifier field in the 0^{th} first configuration register 211 as 1, configure an interrupt location identifier field in the 0^{th} first configuration register 211 as 0, configure an interrupt source identifier field in an extension register 215 as 0, configure a receiver identifier field in this extension register 215 as 2, and configure an interrupt location identifier field in this extension register 215 as 1. In this case, if a signal status of the 0^{th} interrupt line jumps from non-interrupt (such as 0) to interrupt (such as 1), the first transmitter 21 converts the first interrupt signal of the 0^{th} interrupt line into a first message, which is transmitted to the 1^{st} receiver through the bus 12; and the first transmitter 21 converts the first interrupt signal into a second message, which is transmitted to the 2^{nd} receiver through the bus 12. The 1^{st} receiver converts the first message into a second interrupt signal at the 0^{th} interrupt location, and transmits the second interrupt signal to the first processing component 41 corresponding to the second interrupt signal through the second interrupt signal line 42 at the 0^{th} interrupt location. The 2^{nd} receiver converts the second message into a third interrupt signal at the 1 ^{st} interrupt location, and transmits the third interrupt signal to the second processing component 51 corresponding to the third interrupt signal through a third interrupt signal line at the 1^{st} interrupt location.

In some optional embodiments, for an interrupt source of which the broadcast status is the second status (that is, not broadcasted), the first configuration register 211 corresponding to the interrupt source is configured according to the first receiver information, without configuring the extension register.

In the embodiments of the present disclosure, through the configuration function of the first subsystem, the user can configure as required, so as to meet requirements of the user for transmitting the interrupt signal in different application scenarios, thereby improving universality of the apparatus.

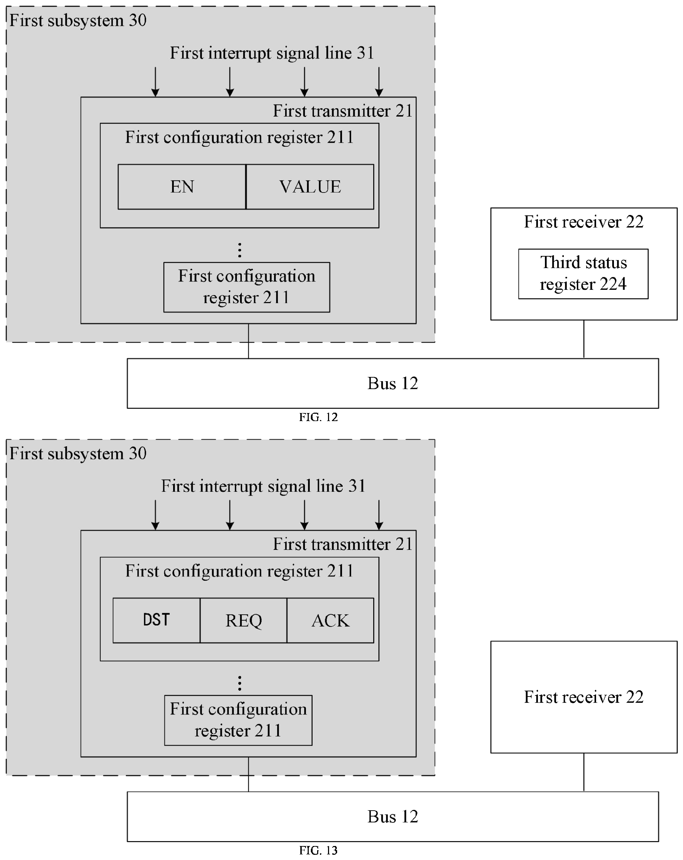

FIG. 12 is a schematic diagram illustrating a structure of an apparatus for transmitting an interrupt signal between subsystems in a system-on-chip according to yet another exemplary embodiment of the present disclosure.

In some optional embodiments, on the basis of any one of the foregoing embodiments, as shown in FIG. 12, the first transmitter 21 includes the first configuration register 211 corresponding to the first interrupt signal line 31. The first configuration register 211 includes a software-controlled enable field EN and a software-controlled interrupt status field VALUE. The second receiver 22 includes a third status register 224.

The first subsystem 30 is configured to configure the software-controlled enable field EN in the first configuration register 211 to an enable status, and configure the software-controlled interrupt status field VALUE to a preset status.

The first transmitter 21 is configured to: in response to the software-controlled enable field EN being in the enable status, generate a third message in the preset bus protocol format based on the preset status of the software-controlled interrupt status field VALUE, and send the third message to the first receiver 22 through the bus.

The first receiver 22 is further configured to: convert the third message into a corresponding fourth interrupt signal, and write the fourth interrupt signal into the third status register 224.

The first subsystem 30 is further configured to: read a current status of the third status register 224, and determine an on/off status of an interrupt signal transmission path between the first transmitter 21 and the first receiver 22 based on a matching result between the current status and the preset status.

The software-controlled enable field EN is used to indicate a control authority of the software for the first transmitter 21. For example, if the software-controlled enable field EN is in the enable status, it indicates that the first transmitter 21 may be controlled through the software. If the EN is in a non-enable status, the first transmitter 21 cannot be controlled through the software. The software-controlled interrupt status field VALUE indicates the signal status of the first interrupt signal line 31 that is configured through the software, so as to simulate an interrupt request behavior through the software. The preset status represents the interrupt status. For example, the preset status is 1.

In some optional embodiments, the first configuration register 211 may further include the receiver information field decried above, which may store the receiver identifier and the interrupt location identifier.

In some optional embodiments, the third status register 224 is configured to store an interrupt signal converted by the first receiver 22 (that is, the fourth interrupt signal).

In some optional embodiments, the third status register 224 may reuse the second status register 223 decried above, or may be a register other than the second status register 223.

In some optional embodiments, the third status register 224 may be a read-only register, and the first subsystem 30 may access the third status register 224 to read the fourth interrupt signal in the third status register 224. This prevents the first subsystem 30 from modifying content in the third status register 224, thereby improving information security.

In some optional embodiments, the specific operation of converting the third message into the fourth interrupt signal by the first receiver 22 is consistent with that for the second interrupt signal described above, and details are not described herein.

In some optional embodiments, the first transmitter 21 may determine whether the EN is in the enable status by detecting a value of the software-controlled enable field EN in the first configuration register 211; and read a value of the VALUE from the software-controlled interrupt status field VALUE when the EN is in the enable status, to determine whether the VALUE is in the preset status, so as to read the first receiver information from the first configuration register 211 when the VALUE is in the preset status, generate the third message in the preset bus protocol format according to the first receiver information, and send the third message to the first receiver 22 through the bus 12.

In some optional embodiments, the first receiver 22 may store the third message into the second message register 221, convert the third message into the fourth interrupt signal by the second conversion unit 222, and write the fourth interrupt signal into the third status register 224. The first subsystem 30 may read the current status from the third status register 224. If the fourth interrupt signal is successfully written into the third status register 224, the read current status needs to be the fourth interrupt signal. Based on this, after reading the current status, the first subsystem 30 may match the current status with the preset status to obtain a matching result, which may include the current status being consistent (or referred to as matching or identical) or inconsistent with (or referred to as mismatching or different from) the preset status. The first subsystem 30 may determine the on/off status of the interrupt signal transmission path between the first transmitter 21 and the first receiver 22 based on the matching result. The on/off status may include an on status and an off status. If the read current status matches the preset status, it indicates that the first transmitter 21 may successfully convert the interrupt signal into the third message, and successfully transmit the third message to the first receiver 22 through the bus 12. The first receiver 22 may successfully convert the third message into the fourth interrupt signal of the second interrupt signal line 42. In other words, the interrupt signal transmission path between the first transmitter 21 and the first receiver 22 is in the on status. If the current status does not match the preset status, it indicates that the interrupt signal transmission path between the first transmitter 21 and the first receiver 22 is in the off status. Based on this, the interrupt signal transmission path between the first transmitter 21 and the first receiver 22 may be tested by simulating the interrupt request behavior of the interrupt source through the software, thereby ensuring that the interrupt signal can be successfully transmitted to the corresponding interrupt processing component.

In some optional embodiments, for any transmitter and the corresponding receiver in the system-on-chip, the on/off status of the interrupt signal transmission path between the transmitter and the receiver may be tested in the foregoing manner. Details are not described herein.

In some optional embodiments, certain access permission may be set for the software-controlled enable field EN and the software-controlled interrupt status field VALUE in the first configuration register 211. For example, the software-controlled enable field EN and the software-controlled interrupt status field VALUE may only be visible to a developer for testing of the system-on-chip, but be invisible to the user of the system-on-chip, thereby preventing the user from performing unnecessary operations on the apparatus.

In the embodiments of the present disclosure, the control authority of the software for the first transmitter may be controlled based on the software control related fields in the first configuration register. Further, the on/off status of the interrupt signal transmission path between the first transmitter and the corresponding receiver (for example, the first receiver or the second receiver) may be tested by simulating the interrupt request behavior of the interrupt source through the software, to ensure that the interrupt signal can be transmitted between the subsystems through the bus, thereby improving reliability of the system-on-chip.

FIG. 13 is a schematic diagram illustrating a structure of an apparatus for transmitting an interrupt signal between subsystems in a system-on-chip according to still yet another exemplary embodiment of the present disclosure.

In some optional embodiments, on the basis of any one of the foregoing embodiments, as shown in FIG. 13, the first transmitter 21 includes the first configuration register 211 corresponding to the first interrupt signal line 31.

The first configuration register 211 corresponding to the first interrupt signal line 31 is configured to store the first receiver information corresponding to the first interrupt signal line.

The first transmitter 21 is further configured to: obtain from the first subsystem 30 a configuration update request for the first configuration register 211; disable, based on the configuration update request, an interrupt service of the interrupt processing component corresponding to the first receiver information; and feed response information allowing configuration updates back to the first subsystem 30.

The first subsystem 30 is further configured to write new receiver information into the first configuration register 211 in response to the response information.

For the first configuration register 211, reference may be made to the foregoing embodiments. The configuration update request from the first subsystem 30 may be a request instruction issued by the first subsystem 30 through the software, or the first subsystem 30 may write a specified value to a specified location in a specified register (such as a specified field in the first configuration register 211). The configuration update request is used to request an update to the receiver information in the first configuration register 211.

In some optional embodiments, to ensure normal operation of the system-on-chip, before the first configuration register 211 is updated, it is needed to ensure that the interrupt processing component corresponding to the receiver information in the first configuration register 211 has stopped (or referred to as disabled) services. Therefore, after obtaining the configuration update request, the first transmitter 21 may read current receiver information (such as the first receiver information) from the first configuration register 211 based on the configuration update request, and disable the interrupt service of the corresponding interrupt processing component based on the current receiver information. For example, the first transmitter 21 may generate a message (or referred to as a fourth message) that is in the preset bus protocol format and indicates zeroing out. For example, if interrupt indication information in the fourth message is 0, the fourth message is sent to the first receiver 22 through the bus 12. After receiving the fourth message, the first receiver 22 updates the signal status of the corresponding second interrupt signal line 42 to 0 according to the interrupt indication information in the fourth message, thereby causing the corresponding interrupt processing component (such as a first interrupt processing component 41) to disable the interrupt service.

In some optional embodiments, the first transmitter 21 feeds the response information allowing configuration updates back to the first subsystem 30 after the fourth message is sent or after preset duration after the fourth message is sent. The response information allowing configuration updates is used to notify the first subsystem 30 that the first configuration register 211 can be updated.

In some optional embodiments, the first subsystem 30 writes the new receiver information into the first configuration register 211 in response to the response information.

In some optional embodiments, the first subsystem 30 may issue the configuration update request based on an update mechanism in a pre-configured application when a specified update condition is met. For example, a sensor serves as an interrupt source during a driving process of an intelligent driving vehicle, and an interrupt request is issued after sensor data is collected. According to an interrupt signal transmission mode in the embodiments of the present disclosure, an interrupt signal corresponding to the interrupt request is transmitted to a component for perception processing (also referred to as a first perception processing component) in the system-on-chip. The first perception processing component, serving as the first processing component for interrupt processing, responds to the interrupt signal from the sensor and obtains the sensor data from a storage space storing the sensor data, so as to perform perception processing based on the sensor data, thereby providing an effective perception result for route planning and control. In this case, the receiver information in the first configuration register 211 is information of a receiver corresponding to a subsystem where the first perception processing component is located. When the vehicle is in a parked status, the sensor serves as an interrupt source and provides, through the interrupt request, the sensor data to a second perception processing component corresponding to a sentinel mode. In this case, the receiver information in the first configuration register 211 needs to be information of a receiver in a subsystem where the sentinel mode is located. Thus, through the subsystem (such as the first subsystem 30) where the sensor is located, the receiver information in the first configuration register 211 may be updated to receiver information corresponding to the sentinel mode. When the vehicle enters a driving status again, the receiver information in the first configuration register 211 may be updated to receiver information corresponding to the first perception processing component for intelligent driving. Similarly, dynamic reconfiguration of the first configuration register 211 may be implemented based on a specific application scenario of the system-on-chip. For another example, in a scenario of dynamic resource allocation, at a moment t₁, a CPU uses computing resources of a GPU through an interrupt request to complete a computing task of the CPU; and at a moment t₂, a NPU (neural network processing unit) uses the computing resources of the GPU through an interrupt request to complete a computing task of the NPU. After completing the computing task, the GPU notifies the CPU or the NPU through the interrupt request. To be specific, at the moment t₁, the GPU serves as the interrupt source, the interrupt signal needs to be transmitted to the CPU, and the receiver information in the first configuration register 211 needs to be information of a receiver corresponding to the CPU. At the moment t₂, the GPU serves as the interrupt source, the interrupt signal needs to be transmitted to the NPU, and the receiver information in the first configuration register 211 needs to be information of a receiver corresponding to the NPU. In this case, according to the dynamic configuration principle described above, reuse of the computing resources of the GPU may be achieved by updating the receiver information in the first configuration register 211 at different moments.

In the embodiments of the present disclosure, after obtaining the response information feedback from the first transmitter, the first subsystem writes new receiver information into the first configuration register through a handshake mechanism between the first subsystem and the first transmitter. In this way, on one hand, dynamic reconfiguration of the first configuration register may be implemented, allowing the interrupt source of the first subsystem to transmit interrupt signals to different destinations through the bus in different scenarios or at different moments, to meet different requirements. On the other hand, new receiver information is written again when it is ensured that the interrupt processing component currently corresponding to the first configuration register to be updated has stopped the interrupt service. This may avoid problems during the dynamic reconfiguration process, thereby ensuring operational stability and reliability of the system-on-chip.

In some optional embodiments, as shown in FIG. 13, the first configuration register 211 includes a receiver information field DST, a receiver information update request field REQ, and a receiver information update response field ACK.

The first subsystem 30 is configured to configure the receiver information update request field REQ to a first preset value in response to current first receiver information in the receiver information field DST in the first configuration register 211 not meeting a required condition.

The first transmitter 21 is configured to: in response to the receiver information update request field REQ being of the first preset value, determine that the configuration update request for the first configuration register 211 is obtained from the first subsystem 30; generate a fourth message of a preset type according to the first receiver information, and send the fourth message to the first receiver 22 corresponding to the first receiver information through the bus 12, to disable the interrupt service of the interrupt processing component corresponding to the first receiver information; and update the receiver information update response field ACK to a second preset value.

The first subsystem 30 is further configured to: in response to the receiver information update response field ACK being of the second preset value, determine that the response information from the first transmitter 21 is obtained, write the new receiver information into the receiver information field DST, and reset the receiver information update request field REQ and the receiver information update response field ACK.

The receiver information field DST is used to store the receiver information. Optionally, the receiver information field DST may include a receiver identifier field DST ID and an interrupt location identifier field DST IDX. The receiver information update request field REQ indicates whether the first subsystem 30 has initiated the configuration update request. The receiver information update response field ACK indicates whether the first transmitter 21 has fed back the response information.

In some optional embodiments, if a value of the receiver information update request field REQ is the first preset value (for example, 1), it indicates that the first subsystem 30 has initiated the configuration update request. If the value of the REQ is not the first preset value, it indicates that the first subsystem 30 does not initiate the configuration update request. The first transmitter 21 may determine, by detecting the value of the REQ in the first configuration register 211, whether the configuration update request from the first subsystem 30 is obtained.

In some optional embodiments, if a value of the receiver information update response field ACK is the second preset value (for example, 1), it indicates that the first transmitter 21 feeds the response information allowing configuration updates back to the first subsystem 30. The first subsystem 30 may determine, by detecting the value of the ACK, whether the response information of the first transmitter 21 is obtained.

In some optional embodiments, in response to the receiver information update request field REQ being the first preset value, the first transmitter 21 determines that the configuration update request for the first configuration register 211 is obtained from the first subsystem 30, and then may read the first receiver information from the first configuration register 211 to generate the fourth message of the preset type according to the first receiver information. The preset type may refer to a type used to zero out a linear signal status of an interrupt signal on a receiver side. In other words, the interrupt indication information in the fourth message is information (such as 0) indicating non-interrupt, and a format of the fourth message is the preset bus protocol format. The fourth message is sent to the first receiver 22 corresponding to the first receiver information through the bus 12. The first receiver 22 updates the signal status of the second interrupt signal line 42 at the corresponding interrupt location identifier to the non-interrupt status according to the interrupt indication information in the fourth message, so as to disable the interrupt service of the corresponding interrupt processing component.

In some optional embodiments, after sending the fourth message, the first transmitter 21 may update the receiver information update response field ACK in the first configuration register 211 to the second preset value, to feed the response information allowing configuration updates back to the first subsystem 30. The first subsystem 30 reads the value of the ACK, and matches the value of the ACK with the second preset value to determine whether the response information is obtained. After the response information is obtained, the new receiver information is written into the receiver information field DST in the first configuration register 211, to update the receiver information.

In some optional embodiments, after an update to the receiver information field DST of the first configuration register 211 is completed, to ensure subsequent normal operation, the first subsystem 30 may reset the receiver information update request field REQ and the receiver information update response field ACK. For example, the receiver information update request field REQ is reset to a non-first preset value (for example, 0), and the receiver information update response field ACK is reset to a non-second preset value (for example, 0).

In some optional embodiments, a mechanism that the receiver information update response field ACK is reset automatically along with the receiver information update request field REQ may be set, that is, reset of the ACK is automatically triggered by reset of the REQ. In this case, after completing the update to the receiver information field DST of the first configuration register 211, the first subsystem 30 only needs to perform a reset operation on the receiver information update request field REQ, and the ACK is automatically reset accordingly. A specific implementation manner of reset is not limited.

In the embodiments of the present disclosure, the receiver information update request field REQ and the receiver information update response field ACK are set in the first configuration register 211, so that the first subsystem and the first transmitter can perform handshake interaction through the status updates to the two fields, effectively implementing dynamic configuration of the first configuration register 211 and ensuring security and reliability of a configuration process.

In some optional embodiments, on the basis of any one of the foregoing embodiments, the first transmitter 21 includes:
first configuration registers 211 respectively corresponding to at least one first interrupt signal line 31, wherein any one of the first configuration registers 211 is configured to store the first receiver information corresponding to the first interrupt signal line.

During a power-on stage of the system-on-chip, when the first configuration register 211 is in an initial status, the first transmitter is in an initial status and does not monitor a signal status of the first interrupt signal line 31.

The power-on stage of the system-on-chip is a stage where the system-on-chip is powered on and started. The initial status may be the status where all bits in the first configuration register 211 are of a preset value. For example, all the bits in the first configuration register 211 may be 1 or 0. The initial status of the first transmitter 21 indicates that the first transmitter 21 has not yet entered a working status and does not monitor the signal status of the first interrupt signal line 31. The working status of the first transmitter 21 may include a monitoring status and a sending status. The monitoring status refers to a status for monitoring whether the signal status of the first interrupt signal line 31 is 1 or is at a high level (or whether the first interrupt signal is generated). The sending status refers to a status for converting the first interrupt signal into a message (such as the first message or the second message) in the preset bus protocol format and sending the message to the bus when the first interrupt signal is transmitted through the first interrupt signal line 31.

In some optional embodiments, when the first transmitter 21 is in the initial status, although the signal status of the first interrupt signal line 31 jumps, for example, jumps from 0 to 1, the first transmitter 21 would not enter the sending status, so as to avoid sending an incorrect message, thereby ensuring overall security of the system-on-chip.

In some optional embodiments, after startup of the system-on-chip and configuration of the first configuration register 211 are completed, the first transmitter 21 enters the monitoring status from the initial status to start monitoring the signal status of the first interrupt signal line 31. After a jump in the signal status of the first interrupt signal line 31 is detected, the first transmitter 21 switches from the monitoring status to the sending status to convert the first interrupt signal into the first message, which is transmitted to the corresponding interrupt processing component through the bus 12. The system-on-chip may configure the first configuration register 211 during the startup process of the first subsystem 30, for example, configure values of all fields in the first configuration register 211 to corresponding initial values. For example, the value of the receiver information field DST is configured to preset receiver information corresponding to the first configuration register 211, the values of the receiver information update request field REQ and the receiver information update response field ACK are configured to 0, and the values of the software-controlled enable field EN and the software-controlled interrupt status field VALUE are configured to 0. Specific configuration content may be configured according to actual requirements, and is not limited to the foregoing example.

In some optional embodiments, a switch register may be disposed to store an on/off status of the first transmitter. For example, a value 0 of the switch register indicates that the first transmitter is in an off status, equivalent to the initial status described above. In other words, when in the off status, the first transmitter does not monitor the signal status of the first interrupt signal line 31. During the power-on stage of the system-on-chip, the on/off status in the switch register is the off status. After the system-on-chip is started, the on/off status stored in the switch register is updated from the off status (such as 0) to the on status (such as 1), causing the first transmitter to enter the monitoring status and monitor the signal status of the first interrupt signal line 31.

In the embodiments of the present disclosure, during the power-on stage of the system-on-chip, the first transmitter remains in the initial status and does not monitor the signal status of the first interrupt signal line, so that the first transmitter may be prevented from sending an incorrect message, thereby ensuring the overall security of the system-on-chip.

In some optional embodiments, on the basis of any one of the foregoing embodiments, the first transmitter 21 is configured to:
in response to a signal status of at least one first interrupt signal line 31 changing from a first status to a second status at a current moment, enter the sending status from the monitoring status, and convert the first interrupt signal of the at least one first interrupt signal line 31 into the first message in the preset bus protocol format; and
in response to transmission of the interrupt signal of the at least one first interrupt signal line 31 being completed, switch from the sending status to the monitoring status, to monitor the signal status of the first interrupt signal line 31.

The first status is a status indicating non-interruption (for example, 0), and the second status is a status indicating interruption (for example, 1).

In some optional embodiments, the first transmitter 21 may monitor the signal status of the first interrupt signal line at a certain frequency. Alternatively, the first transmitter 21 may monitor the signal status of the first interrupt signal line at the current moment after previous transmission of the interrupt signals of one or more first interrupt signal lines 31 is completed. At the current moment, the first interrupt signals of all first interrupt signal lines 31 with jumps in the signal statuses may be used as to-be-sent first interrupt signals, sequentially. The first transmitter 21 enters the sending status from the monitoring status, and respectively converts the first interrupt signals into first messages in the preset bus protocol format according to a sequence of the first interrupt signals. The first messages are sent to a corresponding receiver (such as the first receiver 22) through the bus 12.

In some optional embodiments, the first transmitter 21 does not monitor the signal status of the first interrupt signal line 31 when in the sending status. After the transmission of all first interrupt signals is completed, the first transmitter 21 switches from the sending status to the monitoring status, and monitors the signal statuses of the first interrupt signal lines 31 again. Others may be deduced by analogy, and orderly transmission of the interrupt signals is implemented through the switching between the monitoring status and the sending status.

In some optional embodiments, if there is a to-be-broadcasted first interrupt signal in the first interrupt signals transmitted by the first interrupt signal lines 31, the corresponding first configuration register 211 may be traversed according to the sequence of the first interrupt signals, and the first interrupt signals may be converted into the first messages, which may be transmitted to respective corresponding first receivers through the bus. Further, the to-be-broadcasted first interrupt signal is traversed, and is converted into a second message based on the extension register 215. The second message is transmitted, through the bus, to the second receiver corresponding to this first interrupt signal.

In the embodiments of the present disclosure, by setting the monitoring status and the sending status of the first transmitter, the first transmitter can monitor the signal status of the first interrupt signal line in the monitoring status, and complete the conversion and sending of the interrupt signal in the sending status, thereby ensuring orderly operation of the first transmitter.

In some optional embodiments, when the first transmitter 21 includes the first conversion unit 212, corresponding functions of the first transmitter 21 in the foregoing embodiments may be completed by the first conversion unit 212.

In some optional embodiments, any subsystem in the system-on-chip may include at least one of a transmitter and a receiver. For specific functions of the transmitter, reference may be made to the first transmitter 21 in any one of the foregoing embodiments. For specific functions of the receiver, reference may be made to the first receiver 22 and the second receiver 23 in any one of the foregoing embodiments. For example, the apparatus in the embodiments of the present disclosure may further include a third receiver corresponding to the first subsystem 30. The third receiver is configured to receive messages from other subsystems from the bus 12, and then convert the messages into interrupt signals transmitted through corresponding interrupt signal lines. The interrupt signals are transmitted to a corresponding interrupt processing component in the first subsystem 30 through the interrupt signal lines. The specific receiver and/or transmitter may be specifically disposed according to actual requirements of the subsystems, and details are not described herein. Optionally, the third transmitter may be disposed within or outside the first subsystem 30.

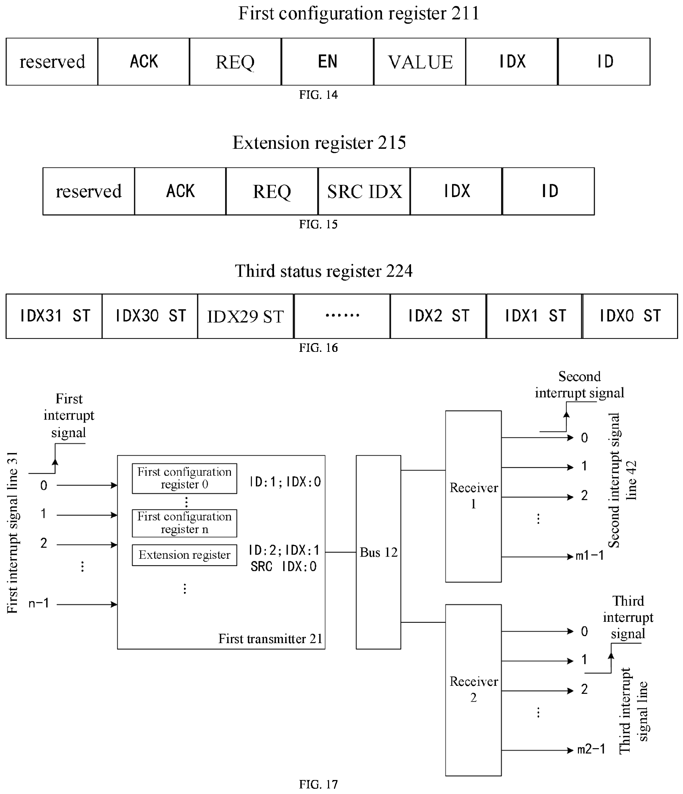

In some optional embodiments, FIG. 14 is a schematic diagram illustrating a first configuration register according to an exemplary embodiment of the present disclosure. As shown in FIG. 14, the first configuration register 211 includes a receiver information update response field ACK, a receiver information update request field REQ, a software-controlled enable field EN, a software-controlled interrupt status field VALUE, and a receiver information field DST. The receiver information field DST includes a receiver identifier sub-field ID and an interrupt location identifier sub-field IDX. A reserved field indicates an unused part. For example, if the first configuration register 211 is a 32-bit register, and a number of bits occupied by the fields of ACK, REQ, EN, VALUE, IDX, and ID is less than 32, unoccupied bits are a reserved field, and each bit of the reserved field may be set to a default value.

In some optional embodiments, FIG. 15 is a schematic diagram illustrating an extension register according to an exemplary embodiment of the present disclosure. As shown in FIG. 15, the extension register 215 includes an ACK, a REQ, an interrupt source information field (SRC IDX), an IDX, and an ID. The interrupt source information field SRC IDX may refer to an interrupt source identifier field. For other fields, reference may be made to the foregoing embodiments.

In some optional embodiments, FIG. 16 is a schematic diagram illustrating a third status register according to an exemplary embodiment of the present disclosure. As shown in FIG. 16, the third status register 224 may be a 32-bit register, and each bit stores a signal status of one interrupt signal line (such as a second interrupt signal line 42 at an output end of the first receiver 21). IDXi ST represents a signal status of an i^{th} (i=0, 1, 2, ..., or m-1) second interrupt signal line 42. If a number of interrupt signal lines exceeds 32, a plurality of third status registers 224 may be used to store signal statuses of the interrupt signal lines. For example, a 0^{th} third status register 224 stores signal statuses of a 0^{th} to a 31^{st} second interrupt signal lines 42, a 1^{st} third status register 224 stores signal statuses of a 32^{nd} to a 63^{rd} second interrupt signal lines 42, and so on. The first status register 213 and the second status register 223 are similar to the third status register 224, and details are not described herein.

In some optional embodiments, FIG. 17 is a schematic diagram illustrating an interrupt signal transmission principle according to an exemplary embodiment of the present disclosure. As shown in FIG. 17, the input end of the first transmitter 21 is electrically connected to n first interrupt signal lines 31, where n is a positive integer. An output end of a receiver 1 is electrically connected to m1 (where m1 is a positive integer) second interrupt signal lines 42. The receiver 1 may be referred to as a 1^{st} receiver, for example, may be the first receiver 22 described above. An output end of a receiver 2 is electrically connected to m2 (where m2 is a positive integer) third interrupt signal lines. The receiver 2 may be referred to as a 2^{nd} receiver, for example, may be the second receiver 23 described above. At a moment, the signal status of the 0^{th} first interrupt signal line 31 jumps from the first status (such as 0) to the second status (such as 1). The first transmitter 21 detects the first interrupt signal of the 0^{th} first interrupt signal line 31, and reads first receiver information from a first configuration register 0 (that is, a 0^{th} first configuration register 211) corresponding to the 0^{th} first interrupt signal line 31. As shown in FIG. 17, the first receiver information is ID: 1 and IDX: 0. In other words, the first receiver information is a 0^{th} second interrupt signal line of the 1^{st} receiver. The first transmitter 21 converts the first interrupt signal of the 0^{th} first interrupt signal line 31 into a first message, and sends the first message to the receiver 1 through the bus 12. The receiver 1 converts the first message into a second interrupt signal of the 0^{th} second interrupt signal line 42, and transmits the second interrupt signal to the corresponding first processing component 41 through the 0^{th} second interrupt signal line 42. Moreover, the 0^{th} first interrupt signal line 31 is the to-be-broadcasted first interrupt signal line, the second receiver information in the corresponding extension register is ID: 2 and IDX: 1, and the interrupt source identifier is SRC IDX: 0. To be specific, the second receiver information is a 1^{st} third interrupt signal line of the 2^{nd} receiver (that is, the receiver 2). The first transmitter 21 converts the first interrupt signal of the 0^{th} first interrupt signal line 31 into a second message, and transmits the second message to the receiver 2 through the bus 12. The receiver 2 converts the second message into a third interrupt signal of the 1^{st} third interrupt signal line, and transmits the third interrupt signal to the corresponding second processing component 51 through the 1^{st} third interrupt signal line. After this transmission of the interrupt signal is completed, the first transmitter 21 switches from the sending status to the monitoring status, to monitor the signal statuses of the first interrupt signal lines 31 again.

According to the apparatus for transmitting an interrupt signal between subsystems in a system-on-chip that is provided in the embodiments of the present disclosure, transmission of an interrupt signal between systems on chip is implemented through the bus. This effectively avoids or reduces designs of the interrupt signal lines between the subsystems, and avoids or reduces crossings caused by wiring of the interrupt lines in the system-on-chip, thereby effectively lowering difficulty of implementing wiring for the system-on-chip. Further, the apparatus in the embodiments of the present disclosure may also support broadcast of interrupt signals, being able to meet a requirement that a same interrupt signal needs to be reported to different interrupt processing components, thereby facilitating resource sharing among a plurality of processors and improving resource utilization efficiency of the system. Further, the interrupt request behavior of the interrupt source may be simulated through software configuration, so as to facilitate testing of the interrupt signal transmission path between the transmitter and the receiver, thereby ensuring correctness and reliability of the interrupt signal transmission path. In addition, the first configuration register and the extension register may be configured through software configuration, so that each interrupt signal may be transmitted to any one or more destinations as required. Compared with an interrupt line connection mode through hardware, the apparatus in the embodiments of the present disclosure can effectively enhance transmission flexibility of the interrupt signal in the system-on-chip. Further, the software may interact with the transmitter to dynamically update the first configuration registers corresponding to the first interrupt signal lines, so that the interrupt signals transmitted on a same first interrupt signal line can be transmitted to different destinations in different scenarios at different moments, facilitating time-sharing multiplexing of resources.

The foregoing embodiments of the present disclosure may be implemented separately or in any combination without conflict. This may be specifically set according to actual requirements, and is not limited in the present disclosure.

### Exemplary method

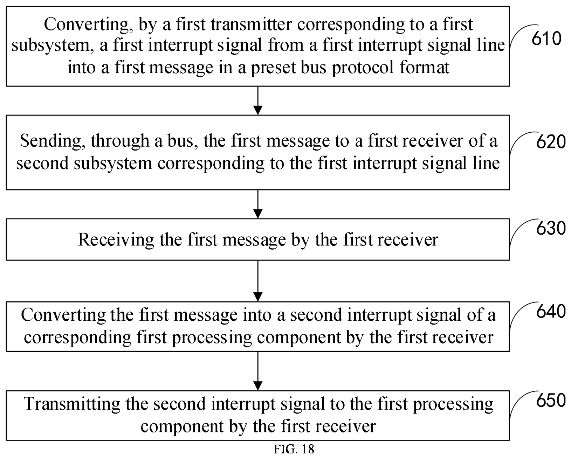

FIG. 18 is a schematic flowchart illustrating a method for transmitting an interrupt signal between subsystems in a system-on-chip according to an exemplary embodiment of the present disclosure. The method for transmitting an interrupt signal between subsystems in a system-on-chip (method for short) in this embodiment may be implemented by using a corresponding apparatus in the present disclosure. As shown in FIG. 18, the method in this embodiment of the present disclosure may include:
step 610: converting, by a first transmitter corresponding to a first subsystem, a first interrupt signal from a first interrupt signal line into a first message in a preset bus protocol format;
step 620: sending, through a bus, the first message to a first receiver of a second subsystem corresponding to the first interrupt signal line;
step 630: receiving the first message by the first receiver;
step 640: converting the first message into a second interrupt signal of a corresponding first processing component by the first receiver; and
step 650: transmitting the second interrupt signal to the first processing component by the first receiver.

The first processing component is an interrupt processing component in the second subsystem that is configured to respond to an interrupt request corresponding to the first interrupt signal.

In some optional embodiments, on the basis of the embodiment shown in FIG. 18, an input end of the first transmitter is electrically connected to a first number of first interrupt signal lines, each of which corresponds to one interrupt source. The first transmitter includes first configuration registers respectively corresponding to the first interrupt signal lines and a first conversion unit.

Step 610 of converting, by a first transmitter corresponding to a first subsystem, a first interrupt signal from a first interrupt signal line into a first message in a preset bus protocol format includes:
storing first receiver information corresponding to the first interrupt signal line by the first configuration register corresponding to the first interrupt signal line; and generating, by the first conversion unit, the first message according to the preset bus protocol format according to the first interrupt signal and the first receiver information corresponding to the first interrupt signal line.

In some optional embodiments, the first transmitter further includes a first status register.

The method in the embodiments of the present disclosure may further include: storing interrupt indication information corresponding to the first interrupt signal line by the first status register; monitoring a current signal status of the first interrupt signal line by the first transmitter; and determining the first interrupt signal based on the current signal status and the interrupt indication information stored in the first status register.

In some optional embodiments, the method in the embodiments of this disclosure further includes: storing the first message by a first message register in the first transmitter.

Step 610 of converting, by a first transmitter corresponding to a first subsystem, a first interrupt signal from a first interrupt signal line into a first message in a preset bus protocol format includes: writing, by the first transmitter, first interrupt indication information corresponding to the first interrupt signal and the first receiver information corresponding to the first interrupt signal line into the first message register, to obtain the first message.

Step 620 of sending, through a bus, the first message to a first receiver of a second subsystem corresponding to the first interrupt signal line includes: sending, by the first transmitter, the first message in the first message register to the bus, and transmitting the first message to the first receiver through the bus.

In some optional embodiments, the first message includes the interrupt indication information corresponding to the first interrupt signal and the first receiver information corresponding to the first interrupt signal line; and the first receiver information includes a corresponding interrupt location identifier of the first processing component corresponding to the first interrupt signal line in the first receiver.

Step 630 of receiving the first message by the first receiver includes: storing the received first message by a second message register in the first receiver; and converting, by a second conversion unit in the first receiver, the first message into the second interrupt signal of the first processing component according to the interrupt indication information and the interrupt location identifier in the second message register.

In some optional embodiments, an output end of the first receiver is electrically connected to at least one second interrupt signal, each of which corresponds to one interrupt processing component.

Step 640 of converting the first message into a second interrupt signal of a corresponding first processing component by the first receiver includes: determining, by the second conversion unit in the first receiver, a second interrupt signal line corresponding to the first message from the at least one second interrupt signal line according to the interrupt location identifier; and updating, according to the interrupt indication information, a signal status of the second interrupt signal line corresponding to the first message, to obtain the second interrupt signal.

In some optional embodiments, the method in the embodiments of the present disclosure further includes:
storing the signal status of the second interrupt signal line by the second status register in the first receiver.

Step 640 of converting the first message into a second interrupt signal of a corresponding first processing component by the first receiver includes: updating, according to the interrupt indication information by the second conversion unit in the first receiver, the signal status of the second interrupt signal line corresponding to the first message in the second status register, so that the second interrupt signal is transmitted to the first processing component through the second interrupt signal line.

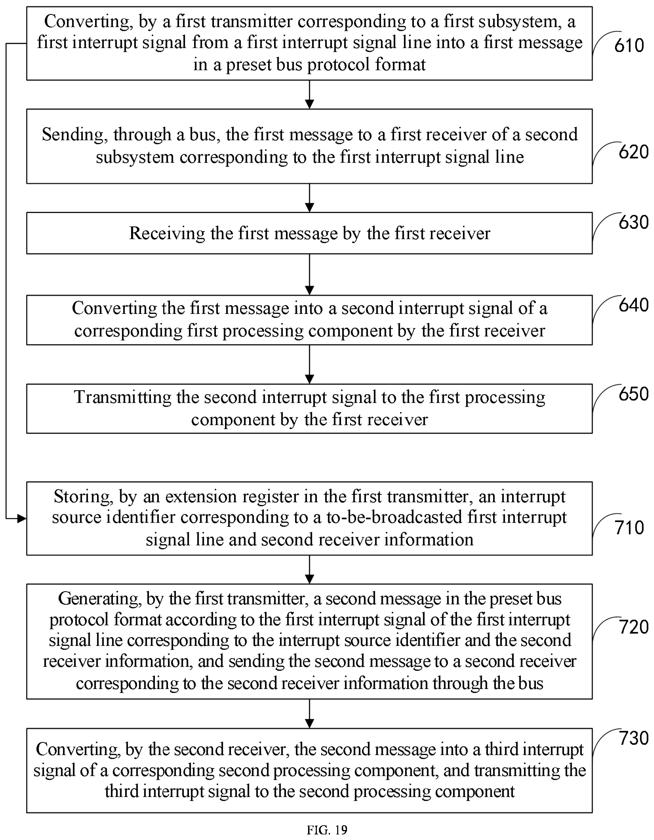

FIG. 19 is a schematic flowchart illustrating a method for transmitting an interrupt signal between subsystems in a system-on-chip according to another exemplary embodiment of the present disclosure.

In some optional embodiments, on the basis of any one of the foregoing embodiments, the method in the embodiments of the present disclosure further includes the following steps.

Step 710: Storing, by an extension register in the first transmitter, an interrupt source identifier corresponding to a to-be-broadcasted first interrupt signal line and second receiver information.

Step 720: Generating, by the first transmitter, a second message in the preset bus protocol format according to the first interrupt signal of the first interrupt signal line corresponding to the interrupt source identifier and the second receiver information, and sending the second message to a second receiver corresponding to the second receiver information through the bus.

The second receiver is a receiver corresponding to a third subsystem.

Step 730: Converting, by the second receiver, the second message into a third interrupt signal of a corresponding second processing component, and transmitting the third interrupt signal to the second processing component.

In some optional embodiments, the method in the embodiments of the present disclosure further includes:
determining, by the first subsystem, a broadcast status corresponding to the interrupt source; determining, in response to the broadcast status being a first status, first receiver information and second receiver information corresponding to the interrupt source; configuring a first configuration register corresponding to the interrupt source, according to the first receiver information; and configuring an extension register corresponding to the interrupt source, according to the second receiver information.

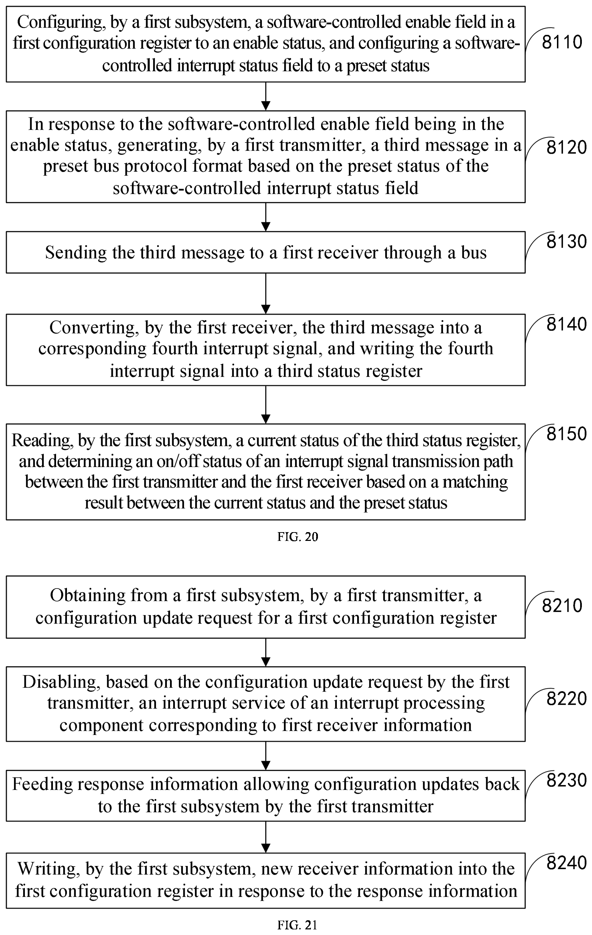

FIG. 20 is a schematic flowchart illustrating a method for transmitting an interrupt signal between subsystems in a system-on-chip according to still another exemplary embodiment of the present disclosure.

In some optional embodiments, on the basis of any one of the foregoing embodiments, the first configuration register corresponding to the first interrupt signal line in the first transmitter includes a software-controlled enable field and a software-controlled interrupt status field.

As shown in FIG. 20, the method in the embodiments of the present disclosure further includes:
step 8110: configuring, by the first subsystem, the software-controlled enable field in the first configuration register to an enable status, and configuring the software-controlled interrupt status field to a preset status;
step 8120: in response to the software-controlled enable field being in the enable status, generating, by the first transmitter, a third message in the preset bus protocol format based on the preset status of the software-controlled interrupt status field;
step 8130: sending the third message to the first receiver through the bus;
step 8140: converting, by the first receiver, the third message into a corresponding fourth interrupt signal, and writing the fourth interrupt signal into a third status register; and
step 8150: reading, by the first subsystem, a current status of the third status register, and determining an on/off status of an interrupt signal transmission path between the first transmitter and the first receiver based on a matching result between the current status and the preset status.

FIG. 21 is a schematic flowchart illustrating a method for transmitting an interrupt signal between subsystems in a system-on-chip according to yet another exemplary embodiment of the present disclosure.

In some optional embodiments, on the basis of any one of the foregoing embodiments, the first configuration register corresponding to the first interrupt signal line in the first transmitter is configured to store the first receiver information corresponding to the first interrupt signal line.

As shown in FIG. 21, the method in the embodiments of the present disclosure further includes:
step 8210: obtaining from the first subsystem, by the first transmitter, a configuration update request for the first configuration register;
step 8220: disabling, based on the configuration update request by the first transmitter, an interrupt service of the interrupt processing component corresponding to the first receiver information;
step 8230: feeding response information allowing configuration updates back to the first subsystem by the first transmitter; and
step 8240: writing, by the first subsystem, new receiver information into the first configuration register in response to the response information.

In some optional embodiments, the first configuration register includes a receiver information field, a receiver information update request field, and a receiver information update response field.

The method in the embodiments of the present disclosure further includes: configuring, by the first subsystem, the receiver information update request field to a first preset value in response to current first receiver information in the receiver information field in the first configuration register not meeting a required condition.
step 8210 of obtaining from the first subsystem, by the first transmitter, a configuration update request for the first configuration register includes:
   in response to the receiver information update request field being of the first preset value, determining, by the first transmitter, that the configuration update request for the first configuration register is obtained from the first subsystem;
step 8220 of disabling, based on the configuration update request by the first transmitter, an interrupt service of the interrupt processing component corresponding to the first receiver information includes:
   generating a fourth message of a preset type according to the first receiver information by the first transmitter; and sending, through the bus, the fourth message to the first receiver corresponding to the first receiver information, to disable the interrupt service of the interrupt processing component corresponding to the first receiver information.
Step 8230 of feeding response information allowing configuration updates back to the first subsystem by the first transmitter includes: updating the receiver information update response field to a second preset value by the first transmitter.
Step 8240 of writing, by the first subsystem, new receiver information into the first configuration register in response to the response information includes: in response to the receiver information update response field being of the second preset value, determining, by the first subsystem, that the response information from the first transmitter is obtained; writing the new receiver information into the receiver information field; and resetting the receiver information update request field and the receiver information update response field.

In some optional embodiments, on the basis of any one of the foregoing embodiments, the first transmitter includes first configuration registers respectively corresponding to at least one first interrupt signal line, where any one of the first configuration registers is configured to store the first receiver information corresponding to the first interrupt signal line.

The method in the embodiments of the present disclosure further includes: during a power-on stage of the system-on-chip, when the first configuration register is in an initial status, the first transmitter is in an initial status and does not monitor a signal status of the first interrupt signal line.

In some optional embodiments, on the basis of any one of the foregoing embodiments, the method in the embodiments of the present disclosure further includes:
in response to a signal status of at least one first interrupt signal line changing from a first status to a second status at a current moment, controlling the first transmitter to enter a sending status from a monitoring status, to convert, by the first transmitter, the first interrupt signal of the at least one first interrupt signal line into the first message in the preset bus protocol format; and in response to transmission of the interrupt signal of the at least one first interrupt signal line being completed, controlling the first transmitter to switch from the sending status to the monitoring status, to monitor the signal status of the first interrupt signal line by the first transmitter.

For beneficial technical effects corresponding to the exemplary embodiments of this method, refer to the corresponding beneficial technical effects in the exemplary method section described above, and details are not described herein.

Any one of the methods for transmitting an interrupt signal between subsystems in a system-on-chip that are provided in the embodiments of the present disclosure may be implemented by any suitable electronic device with a data processing capability, including but not limited to a terminal device, a server, and the like. Alternatively, any one of the methods for transmitting an interrupt signal between subsystems in a system-on-chip that are provided in the embodiments of the present disclosure may be implemented by a processor. For example, the processor implements, by calling corresponding instructions stored in a memory, any one of the methods for transmitting an interrupt signal between subsystems in a system-on-chip that are mentioned in the embodiments of the present disclosure. Details are not described below.

### Exemplary electronic device

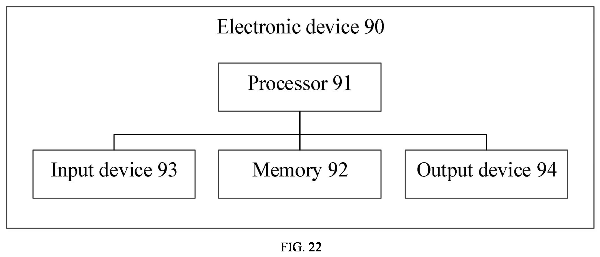

FIG. 22 is a diagram illustrating a structure of an electronic device according to an embodiment of the present disclosure. The electronic device includes at least one processor 91 and a memory 92.

The processor 91 may be a central processing unit (CPU) or another form of processing unit having a data processing capability and/or an instruction execution capability, and may control another component in the electronic device 90 to perform a desired function.

The memory 92 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer readable storage medium. The processor 91 may run the one or more program instructions to implement the method and/or other desired functions in the foregoing embodiments of this disclosure.

In an example, the electronic device 90 may further include an input device 93 and an output device 94. These components are interconnected through a bus system and/or other forms of connection mechanisms (not shown).

The input device 93 may further include a touch screen, a microphone, and various sensors. The sensors may include, for example, an image sensor (such as a camera or a lens), a laser radar, a millimeter wave radar, an ultrasonic radar, a positioning sensor, a pressure sensor, an air quality sensor, and a temperature sensor. The image sensor, the laser radar, the millimeter wave radar, and the ultrasonic radar may be used to sense surrounding environments, that is, to detect dynamic and static objects in the surrounding environments. The dynamic and static objects may include static objects such as a lane marking, a road edge, an arrow, a sign, a trees, and a building, and dynamic objects such as a surrounding vehicle, a pedestrian, and a cyclist. The positioning sensor is used to locate a mobile device (such as a vehicle or a robot) where the electronic device is located. The positioning sensor may include, for example, an inertial measurement unit (IMU for short) and a global positioning system (GPS for short). The pressure sensor may be used to detect seat pressure. The temperature sensor may be used to detect temperature inside a vehicle cockpit. The air quality sensor may be used to detect air quality inside the vehicle cockpit.

The output device 94 may output various information to the outside, and may include, for example, a display, a speaker, a communication network, and a remote output device connected to the communication network.

Certainly, for simplicity, FIG. 22 shows only some of the components in the electronic device 90 that are related to the present disclosure, and components such as a bus and an input/output interface are omitted. In addition, according to specific applications, the electronic device 90 may also include any other appropriate components.

An embodiment of the present disclosure further provides a system-on-chip, which may include the apparatus for transmitting an interrupt signal between subsystems in a system-on-chip that is provided in any one of the foregoing embodiments.

In some optional embodiments, the system-on-chip in this embodiment of the present disclosure may further include at least one first subsystem and at least one second subsystem.

Exemplary computer program product and computer readable storage medium

In addition to the foregoing methods and devices, embodiments of the present disclosure may also provide a computer program product including computer program instructions that, when run by a processor, cause the processor to perform the steps, of the method according to the embodiments of the present disclosure, that are described in the "Exemplary Method" section described above.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps, of the method according to the embodiments of the present disclosure, that are described in the "Exemplary Method" section described above.

The computer readable storage medium may be one readable medium or any combination of a plurality of readable media. The readable medium may be a readable signal medium or a readable storage medium. The readable storage medium includes, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, the advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. An apparatus (20) for transmitting an interrupt signal between subsystems in a system-on-chip, **characterized in that** the apparatus comprises:
a first transmitter (21) corresponding to a first subsystem (30), configured to: convert a first interrupt signal from a first interrupt signal line (31) into a first message in a preset bus protocol format, and send, through a bus (12), the first message to a first receiver (22) of a second subsystem (40) corresponding to the first interrupt signal line (31), wherein
the first receiver (22) is configured to: receive the first message, convert the first message into a second interrupt signal of a corresponding first processing component (41), and transmit the second interrupt signal to the first processing component (41); and the first processing component (41) is an interrupt processing component in the second subsystem (40) that is configured to respond to an interrupt request corresponding to the first interrupt signal.

2. The apparatus according to claim 1, wherein an input end of the first transmitter (21) is electrically connected to a first number of first interrupt signal lines (31), each of which corresponds to one interrupt source; and
the first transmitter (21) comprises:
first configuration registers (211) respectively corresponding to the first interrupt signal lines (31), wherein the first configuration register (211) corresponding to any one of the first interrupt signal lines (31) is configured to store first receiver information corresponding to that first interrupt signal line (31); and
a first conversion unit (212), configured to generate the first message according to the preset bus protocol format according to the first interrupt signal and the first receiver information corresponding to the first interrupt signal line (31).

3. The apparatus according to claim 2, wherein the first transmitter (21) further comprises:
a first status register (213), configured to store interrupt indication information corresponding to the first interrupt signal line (31); and
the first transmitter (21) is further configured to:
monitor a current signal status of the first interrupt signal line (31); and
determine the first interrupt signal based on the current signal status and the interrupt indication information stored in the first status register (213).

4. The apparatus according to claim 1, wherein the first transmitter (21) further comprises:
a first message register (214), configured to store the first message; and
the first transmitter (21) is further configured to: write interrupt indication information corresponding to the first interrupt signal and first receiver information corresponding to the first interrupt signal line (31) into the first message register (214), to obtain the first message; and send the first message in the first message register (214) to the bus (12), and transmit the first message to the first receiver (22) through the bus (12).

5. The apparatus according to claim 1, wherein the first message comprises interrupt indication information corresponding to the first interrupt signal and first receiver information corresponding to the first interrupt signal line (31); the first receiver information comprises a corresponding interrupt location identifier of the first processing component (41) corresponding to the first interrupt signal line (31) in the first receiver (22); and
the first receiver (22) comprises:
a second message register (221), configured to store the received first message; and
a second conversion unit (222), configured to convert the first message into the second interrupt signal of the first processing component (41) according to the interrupt indication information and the interrupt location identifier in the second message register (221).

6. The apparatus according to claim 5, wherein an output end of the first receiver (22) is electrically connected to at least one second interrupt signal line (42), each of which corresponds to one interrupt processing component; and
the second conversion unit (222) is further configured to: determine a second interrupt signal line (42) corresponding to the first message from the at least one second interrupt signal line (42) according to the interrupt location identifier; and update, according to the interrupt indication information, a signal status of the second interrupt signal line (42) corresponding to the first message.

7. The apparatus according to claim 6, wherein the first receiver (22) further comprises:
a second status register (223), configured to store the signal status of the second interrupt signal line (42); and
the second conversion unit (222) is further configured to update, according to the interrupt indication information, the signal status of the second interrupt signal line (42) corresponding to the first message in the second status register (223), so that the second interrupt signal is transmitted to the first processing component (41) through the second interrupt signal line (42).

8. The apparatus according to any one of claims 1 to 7, wherein the first transmitter (21) further comprises:
an extension register (215), configured to store an interrupt source identifier corresponding to a to-be-broadcasted first interrupt signal line (31) and second receiver information;
the first transmitter (21) is further configured to: generate a second message in the preset bus protocol format according to the first interrupt signal of the first interrupt signal line (31) corresponding to the interrupt source identifier and the second receiver information, and send the second message to a second receiver (23) corresponding to the second receiver information through the bus (12), wherein the second receiver (23) is a receiver corresponding to a third subsystem (50); and
the second receiver (23) is configured to convert the second message into a third interrupt signal of a corresponding second processing component (51), and transmit the third interrupt signal to the second processing component (51).

9. The apparatus according to claim 8, wherein the first subsystem (30) is configured to:
determine a broadcast status corresponding to the interrupt source;
determine, in response to the broadcast status being a first status, first receiver information and second receiver information corresponding to the interrupt source;
configure a first configuration register (211) corresponding to the interrupt source, according to the first receiver information; and
configure an extension register (215) corresponding to the interrupt source, according to the second receiver information.

10. The apparatus according to any one of claims 1 to 7, wherein the first transmitter (21) comprises:
the first configuration register (211) corresponding to the first interrupt signal line (31), wherein the first configuration register (211) comprises a software-controlled enable field and a software-controlled interrupt status field;
the first subsystem (30) is configured to configure the software-controlled enable field in the first configuration register (211) to an enable status, and configure the software-controlled interrupt status field to a preset status;
the first transmitter (21) is configured to: in response to the software-controlled enable field being in the enable status, generate a third message in the preset bus protocol format based on the preset status of the software-controlled interrupt status field, and send the third message to the first receiver (22) through the bus (12);
the first receiver (22) is further configured to: convert the third message into a corresponding fourth interrupt signal, and write the fourth interrupt signal into a third status register (224); and
the first subsystem (30) is further configured to: read a current status of the third status register (224), and determine an on/off status of an interrupt signal transmission path between the first transmitter (21) and the first receiver (22) based on a matching result between the current status and the preset status.

11. The apparatus according to any one of claims 1 to 7, wherein the first transmitter (21) comprises:
the first configuration register (211) corresponding to the first interrupt signal line (31), configured to store the first receiver information corresponding to the first interrupt signal line (31);
the first transmitter (21) is further configured to: obtain from the first subsystem (30) a configuration update request for the first configuration register (211); disable, based on the configuration update request, an interrupt service of the interrupt processing component corresponding to the first receiver information; and feed response information allowing configuration updates back to the first subsystem (30); and
the first subsystem (30) is further configured to write new receiver information into the first configuration register (211) in response to the response information.

12. The apparatus according to claim 11, wherein the first configuration register (211) comprises a receiver information field, a receiver information update request field, and a receiver information update response field;
the first subsystem (30) is configured to configure the receiver information update request field to a first preset value in response to current first receiver information in the receiver information field in the first configuration register (211) not meeting a required condition;
the first transmitter (21) is configured to: in response to the receiver information update request field being of the first preset value, determine that the configuration update request for the first configuration register (211) is obtained from the first subsystem (30); generate a fourth message of a preset type according to the first receiver information, and send, through the bus (12), the fourth message to the first receiver (22) corresponding to the first receiver information, to disable the interrupt service of the interrupt processing component corresponding to the first receiver information; and update the receiver information update response field to a second preset value; and
the first subsystem (30) is further configured to: in response to the receiver information update response field being of the second preset value, determine that the response information from the first transmitter (21) is obtained, write the new receiver information into the receiver information field, and reset the receiver information update request field and the receiver information update response field.

13. The apparatus according to any one of claims 1 to 7, wherein the first transmitter (21) comprises:
first configuration registers (211) respectively corresponding to at least one first interrupt signal line (31), wherein any one of the first configuration registers (211) is configured to store the first receiver information corresponding to the first interrupt signal line (31); and
during a power-on stage of the system-on-chip, when the first configuration register (211) is in an initial status, the first transmitter (21) is in an initial status and does not monitor a signal status of the first interrupt signal line (31).

14. The apparatus according to any one of claims 1 to 7, wherein the first transmitter (21) is configured to:
in response to a signal status of at least one first interrupt signal line (31) changing from a first status to a second status at a current moment, enter a sending status from a monitoring status, to convert the first interrupt signal of the at least one first interrupt signal line (31) into the first message in the preset bus protocol format; and
in response to transmission of the interrupt signal of the at least one first interrupt signal line (31) being completed, switch from the sending status to the monitoring status, to monitor the signal status of the first interrupt signal line (31).

15. A method for transmitting an interrupt signal between subsystems in a system-on-chip, **characterized in that** the method comprises:
Converting (610), by a first transmitter corresponding to a first subsystem, a first interrupt signal from a first interrupt signal line into a first message in a preset bus protocol format;
Sending (620), through a bus, the first message to a first receiver of a second subsystem corresponding to the first interrupt signal line;
receiving (630) the first message by the first receiver;
converting (640) the first message into a second interrupt signal of a corresponding first processing component by the first receiver; and
transmitting (650) the second interrupt signal to the first processing component by the first receiver, wherein the first processing component is an interrupt processing component in the second subsystem that is configured to respond to an interrupt request corresponding to the first interrupt signal.

16. A computer readable storage medium, on which a computer program is stored, wherein the computer program, when executed by a processor, causes the processor to implement the method according to claim 15.
